# EUROPEAN PATENT APPLICATION

(11) **EP 1 098 475 A1**
(43) Date of publication of application: **09.05.2001**
(21) Application number: 00922986.5
(22) Date of filing: 08.05.2000
(51) Int. Cl.: H04L 12/28

(54) **NETWORK CONNECTION RECOGNITION METHOD, NETWORK SYSTEM AND NETWORK CONNECTION TERMINAL DEVICE**

(30) Priority: 11.05.1999 JP 13032699
(71) Applicant: Sony Corporation, Tokyo 141-0001 (JP)
(72) Inventor: AOKI, Yukihiko Sony Corporation, Tokyo 141-0001 (JP); UCHIDA, Yoshimi Sony Corporation, Tokyo 141-0001 (JP)
(74) Representative: Ayers, Martyn Lewis Stanley
(86) International application number: JP0002934
(87) International publication number: WO0069122

(57) **Abstract**

In the case where a plurality of devices are connected to a predetermined network, there is performed first processing of sending a command to an opposite party connected via the network to inquire a unit type or a subunit type, from a specific device connected to the network. There is performed second processing of sending a command corresponding to a type discriminated based on a response obtained by the first processing. There is executed third processing of determining a kind of the device based on a response obtained by the second processing. Thus, the kind of a connected device can be accurately determined using a command corresponding to the kind of each device.

## Description

### TECHNICAL FIELD

The present invention relates to a network connection recognition method suited for recognizing a device connected by a bus line of, for example, the IEEE 1394 scheme, and a network system and a network connection terminal device to which this network recognition method is applied.

### BACKGROUND ART

Audio devices and video devices (hereafter referred to as AV devices) capable of transmitting information to each other via a network using a serial data bus of the IEEE (The Institute of Electrical and Electronics Engineers) 1394 scheme have been developed. In this network, an AV device connected to the network can be controlled by using a predetermined command (AV/C Command Transaction Set: hereafter referred to as AV/C command). Details of the IEEE 1394 scheme and details of the AV/C Command are described in AV/C Digital Interface Command Set General Specification opened to the public in 1394 Trade Association.

As conventional AV devices connected via the bus line of the IEEE 1394 scheme, there are digital video camera devices and digital video tape recording and playback devices of, for example, a standard called DV scheme. In other words, two recording and playback devices are prepared and connected via a bus line which conforms to the IEEE 1394 scheme. Digital video data reproduced from one device is transmitted by this bus line and recorded by the other device.

By thus connecting AV devices via the bus line of the IEEE 1394 scheme, large amount data such as digital video data can be transmitted in real time and editing of video data or the like can be conducted efficiently.

Data which can be transmitted via the bus line of the IEEE 1394 scheme is not limited to the above described digital video data, but various kinds of other digital data can be transmitted. Various data handled by AV devices can be transmitted. In other words, a large number of (for example, sixty-four) devices can be connected to one network via the bus line of the IEEE 1394 scheme. Among the large number of devices, video data, audio data, and control data can be transmitted.

For example, it becomes possible to connect an IRD (Integrated Receiver Decoder) serving as a receiving device for receiving digital satellite broadcast to a recording and playback device referred to as DVCR (Digital Video Cassette Recorder) using magnetic tape as a recording medium via the bus line of the IEEE 1394 scheme, and record video data received by the IRD, by using the DVCR. Furthermore, it becomes possible to connect a digital audio disc recording and playback device using an optical magnetic disc called MD (Mini Disc) as a recording medium to the same bus line, and record audio data received by the IRD, by using the audio disc recording and playback device (MD device).

In the case where a large number of devices are thus connected to one network, a device for controlling data transmission within the network in the IEEE 1394 scheme provides all devices in the network with individual node IDs, and manages the transmitting source and receiving destination by using the node IDs. As a result, data transmission between specific devices in the network becomes possible.

By virtue of the node ID, however, only recognition of an individual device is possible. It is difficult to know the function of an individual device provided with the node ID when the device is simply connected. For example, in the case where the above described IRD, DVCR, and MD device are to be connected to one network and video data of a video channel received by the IRD and audio data of an audio channel received by the IRD are to be recorded respectively in the DVCR and the MD device, the IRD cannot know a device of which node ID is the DVCR and a device of which node ID is the MD device when they are merely connected to the network.

Unlike the case where two devices are connected via one bus line in one-to-one correspondence, therefore, there occurs a problem that the user needs to conduct a setting work beforehand to specify node IDs of destination devices whereto data should be transmitted, in the case where a large number of devices are connected via one network. For example, a list of connected devices is displayed on display means of some device connected to the network, and the user is urged to select a device to which data should be transmitted. Such user setting is required.

The case where the transmission of video data and the transmission of audio data are conducted via one network has been described. As application such as the home network spreads, however, it is expected that one device controls devices of many kinds in many cases. It is thus demanded to facilitate recognition of a device connected to the network.

### DISCLOSURE OF THE INVENTION

An object of the present invention is to facilitate the recognition of the kind of a device connected by a network such as that of the IEEE 1394 scheme.

A first invention is a network connection recognition method for recognizing a device connected to a predetermined network, the network connection recognition method executing:
first processing of sending a command to an opposite party connected via the network to inquire a unit type or a subunit type;
second processing of sending a command corresponding to a type discriminated based on a response obtained by the first processing; and
third processing of determining a kind of the device based on a response obtained by the second processing. Thus, on the basis of a response to an inquiry command sent in the first processing, the type of the connected device is discriminated. Thereafter, a command corresponding to the type is sent. By thus using a command corresponding to each device, the kind of the connected device can be accurately determined.

A second invention is the network connection recognition method of the first invention, wherein
the second processing is processing of sending a command for opening a descriptor of the opposite party and processing of sending a command for reading out the opened descriptor, and a medium type of the device is determined based on the readout. By doing so, it becomes possible to perform the processing of discriminating the details of a device using a disc whose data of a medium type is described in the descriptor.

A third invention is the network connection recognition method of the first invention, wherein
the second processing is processing of sending a command for inquiring a format of a medium, and when there is a correct response to the command, the device is determined to be a device of a predetermined medium format. By doing so, it becomes possible to perform processing of deciding the kind of the device in case of a device using tape or the like as a medium.

A fourth invention is the network connection recognition method of the first invention, wherein
the processing of recognizing the device is executed after node IDs of devices connected to the network are acquired, when a bus line forming the network is reset. By doing so, it becomes possible to positively determine the kind of each of connected devices at the time of bus resetting, for example, in the case where there is an alteration in the network configuration.

A fifth invention is a network system formed by connecting a plurality of terminal devices via a predetermined network, the network system including as a first terminal device in the network:
a command storage section for storing a first command to be used to inquire of a specific terminal device connected via the network about a unit type or a subunit type, and a second command prepared so as to correspond to a type determined based on a response to the first command; and
a network control section for successively sending out the first command and the second command stored in the command storage section to the network, and determining a kind of a device of an opposite party based on a response thereto,
the network system including as a second terminal device in the network:
a data transmission section responsive to discrimination of the first command sent out front the first terminal device, for sending a first response to which data of a unit type or a subunit type the second terminal device has is added, and responsive to discrimination of the second command after transmission of the first response, for sending a second response to which data specified by the second command is added. Thus, on the basis of a response to the first command, the type of the second terminal device connected to the first terminal device is discriminated. Thereafter, a command corresponding to the type is sent. Thereby, the kind of the second terminal device can be accurately determined on the first terminal device side.

A sixth invention is the network system of the fifth invention, wherein:
the second terminal device includes a descriptor storage section for storing data concerning a configuration of the device as a descriptor;
the second command stored in the command storage section included in the first terminal device includes a command for opening the descriptor stored in the descriptor storage section of the second terminal device, and a command for reading out the opened descriptor; and
the network control section determines a medium type handled by the second terminal device, based on a response to the command for reading out the descriptor. In the case where the second terminal device is a device whose data of a medium type is described in the descriptor, therefore, the first terminal device can determine details of the second terminal device.

A seventh invention is the network system of the fifth invention, wherein:
the second terminal device includes a storage section for storing data concerning a format handled by the device,
the second command stored in the command storage section included in the first terminal is a command for inquiring a format of a medium; and
the network control section determines the second terminal device to be a device of a predetermined medium format when there is a correct response to the command for inquiring a format of a medium. In the case where the second terminal device is a device which uses tape or the like as a medium, therefore, the first terminal device can determine the kind of the second terminal device.

An eighth invention is the network system of the fifth invention, wherein
the network control section performs processing of sending out the first and second commands after the network control section has acquired node IDs of terminal devices connected to the network, when a bus line forming the network is reset. By doing so, it becomes possible to positively determine the kind of the second terminal device to which the first terminal device is connected, at the time of bus resetting, for example, in the case where there is an alteration in the network configuration.

A ninth invention is a network connection terminal device connected to a predetermined network, the network connection terminal device including
a command storage section for storing a first command to be used to inquire of an opposite party connected via the network about a unit type or a subunit type, and a second command prepared so as to correspond to a type determined based on a response to the first command, and
a network control section for successively sending out the first command and the second command stored in the command storage section to the network, and determining a kind of a device of the opposite party based on a response thereto. By doing so, the kind of a device connected to the terminal device can be determined by using a command corresponding to each device. The kind of a device connected to the terminal device via the network can be determined accurately.

A tenth invention is the network connection terminal device of the ninth invention, wherein
the second command stored in the command storage section includes a command for opening the descriptor of the opposite party, and a command for reading out the opened descriptor, and
the network control section determines a medium type of the device, based on a response to the command for reading out the descriptor. In the case where the connected device is a device whose data of a medium type is described in the descriptor, therefore, the processing of deciding the details of the device becomes possible.

An eleventh invention is the network connection terminal device of the ninth invention, wherein
the second command stored in the command storage section is a command for inquiring a format of a medium, and
the network control section determines the device of the opposite party to be a device of a predetermined medium format when there is a correct response to the command for inquiring a format of a medium. By doing so, it becomes possible to perform processing of deciding the kind of the device in the case where a device using tape or the like as a medium is connected.

A twelfth invention is the network connection terminal device of the ninth invention, wherein
the network control section performs processing of sending out the first and second commands after the network control section has acquired node IDs of devices connected to the network, when a bus line forming the network is reset. By doing so, it becomes possible to positively determine the kind of each of connected devices at the time of bus resetting, for example, in the case where there is an alteration in the configuration of the network to which the terminal device is connected.

A thirteenth invention is a network connection terminal device connected to a predetermined network, the network connection terminal device including:
a data transmission section for performing communication with another terminal device in the network;
a command discrimination section for discriminating a command received by the data transmission section; and
a response generation section responsive to discrimination of the first command in the command discrimination section, for generating a first response to which data of a unit type or a subunit type the device has is added, and responsive to discrimination of the second command in the command discrimination section after transmission of the first response, for generating a response to which data specified by the second command is added and sending out the generated response from the data transmission section. By doing so, it becomes possible to accurately determine the kind of the terminal device by another terminal device connected to the terminal device via the network.

A fourteenth invention is the network connection terminal device of the thirteenth invention, wherein
the network connection terminal device includes a descriptor storage section for storing data on a configuration of the device as a descriptor, and
when the command discrimination section has discriminated the second command, processing of opening the descriptor stored in the descriptor storage section and processing of reading out the opened descriptor and sending the opened descriptor to a sender of the command are performed. In the case where data of the medium type is described in the descriptor, therefore, it becomes possible in another terminal device connected to the terminal device via the network to accurately determine the medium type.

A fifteenth invention is the network connection terminal device of the thirteenth invention, wherein
the network connection terminal device includes a storage section for storing data on a format handled by the device, and
when the command discrimination section has discriminated the second command, processing of sending data on the format to a sender of the command is performed. By doing so, it becomes possible in another terminal device connected to the terminal device via the network to accurately determine the medium type such as tape.

### BRIEF DESCRIPTION OF DRAWINGS

FIG. 1 is a block diagram showing a configuration example of a whole system according to an embodiment of the present invention.
FIG. 2 is a block diagram showing a configuration example of a digital satellite broadcast receiver.
FIG. 3 is a block diagram showing a configuration example of a video recording and playback device.
FIG. 4 is a block diagram showing a configuration example of an audio recording and playback device.
FIG. 5 is a diagram showing an example of a frame structure prescribed by the IEEE 1394 scheme.
FIG. 6 is a diagram showing an example of a structure of an address space of the CRS architecture.
FIG. 7 is a diagram showing examples of positions, names, and functions of principal CRSs.
FIG. 8 is a diagram showing structure examples of plug control registers.
FIG. 9 is a diagram showing structure examples of oMPR, oPCR, iMPR, and iPCR.
FIG. 10 is a diagram showing an example of relations among plugs, plug control registers, and transmission channels.
FIG. 11 is a diagram showing an example of a data structure using a hierarchical structure of descriptors.
FIG. 12 is a diagram showing an example of a data structure of descriptors.
FIG. 13 is a diagram showing an example of a generation ID of FIG. 12.
FIG. 14 is a diagram showing an example of a list ID of FIG. 12.
FIG. 15 is a diagram showing an example of a stack model of an AV/C command.
FIG. 16 is a diagram showing an example of a relation between commands and responses of an AV/C command.
FIG. 17 is a diagram showing an example of a relation between commands and responses of an AV/C command in more detail.
FIG. 18 is a diagram showing an example of a data structure of an AV/C command.
FIG. 19 is a diagram showing a specific example of an AV/C command.
FIG. 20 is a diagram showing specific examples of a command and a response of an AV/C command.
FIG. 21 is a flow chart showing an example of device discrimination processing according to an embodiment of the present invention.
FIG. 22 is a diagram showing an example of a format of a subunit-info-command according to an embodiment of the present invention.
FIG. 23 is a diagram showing an example of a format of a response to a subunit-info-command according to an embodiment of the present invention.
FIG. 24 is a diagram showing an example of a format of a unit-info-command according to an embodiment of the present invention.
FIG. 25 is a diagram showing an example of a format of a response to a unit-info-command according to an embodiment of the present invention.
FIG. 26 is a diagram showing an example of a subunit type according to an embodiment of the present invention.
FIG. 27 is a diagram showing an example of a format of an open descriptor command according to an embodiment of the present invention.
FIG. 28 is a diagram showing an example of a format of a read descriptor command according to an embodiment of the present invention.
FIG. 29 is a diagram showing an example of a descriptor of a disc subunit according to an embodiment of the present invention.
FIG. 30 is a diagram showing a data structure example of a medium type of a disc subunit descriptor.
FIG. 31 is a diagram showing an example of a format of a tape playback command according to an embodiment of the present invention.
FIG. 32 is a diagram showing a format example of a response to a tape playback command according to an embodiment of the present invention.
FIG. 33 is a diagram showing an example of a unit directory according to another embodiment of the present invention.
FIG. 34 is a diagram showing an example of correspondence between protocols and command sets according to another embodiment of the present invention.
FIG. 35 is a diagram showing an example of a CTS code according to another embodiment of the present invention.
FIG. 36 is a diagram showing an example of key data according to still another embodiment of the present invention.

### BEST MODE FOR CARRYING OUT THE INVENTION

An embodiment of the present invention will be described below with reference to accompanying drawings.

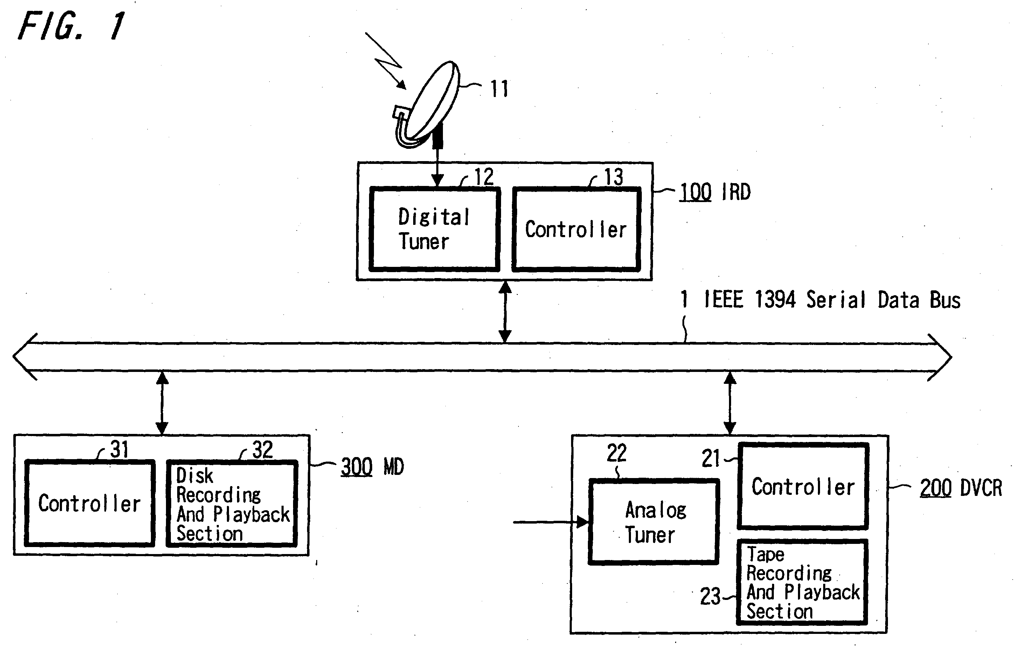

A configuration example of a network system to which the present invention is applied will now be described referring to FIG. 1. In this network system, a plurality of devices are connected via a serial data bus 1 (hereinafter referred to simply as bus 1) of the IEEE 1394 scheme. In FIG. 1, there is shown an example in which three AV devices 100, 200 and 300 are connected. It is now assumed that devices connected to the bus 1 are devices each having a terminal of the IEEE 1394 scheme, and the devices are an IRD (Integrated Receiver Decoder) 100 serving as a digital satellite broadcast receiver, a DVCR (Digital Video Cassette Recorder) 200 serving as a digital video recording and playback device, and an MD (Mini Disc) device 300 serving as a digital audio recording and playback device.

Electronic devices such as the IRD 100, DVCR 200, and MD device 300 connected to the bus 1 are herein called units. Between units, information stored in the units can be mutually read and written using a descriptor prescribed by AV/C Digital Interface Command Set General Specification (hereinafter referred to as AV/C command) of the AV/C Command Transaction Set. The descriptor is data on details of each unit (device) written in a memory connected to a control section or the like of the unit in accordance with a predetermined description form. Details of the AV/C command are described in AV/C Digital Interface Command Set General Specification opened to the public in 1394 Trade Association. Furthermore, in the AV/C command, each of functions that the unit has is called subunit.

The IRD 100 for receiving digital satellite broadcast or the like has a parabolic antenna 11 connected thereto. A digital tuner 12 connected to the parabolic antenna 11 performs processing for receiving a signal of a predetermined channel and decoding it. In this case, a controller 13 incorporated in the IRD 100 effects control concerning the receiving operation such as receiving and decoding.

As channels that the IRD 100 can receive, there are audio channels from which only audio data such as tunes are obtained, and data channels from which various data such as data for web perusal of the Internet are obtained, in addition to video channels (so-called channels for ordinary television broadcast) from which video data and audio data annexed to the video data are obtained. As audio channels transmitting audio data, there are channels from which audio data compressed using, for example, the MPEG scheme are obtained, and channels from which audio data subjected to high efficiency compression encoding such as ATRAC (Adaptive Transform Acoustic Coding) scheme are obtained.

Furthermore, data transmission with the IRD 100 via the bus 1 is also controlled by the controller 13. In data transmission via the bus 1, the controller 13 is adapted to be able to control operation of other devices 200 and 300 connected by the bus 1 using the above described AV/C command. For example, the controller 13 can transmit video data and audio data of a video channel received by the IRD 10 to the DVCR 200, and also control the recording operation in the DVCR 200 to record video data, etc. video tape in a video cassette mounted thereon, thus allowing video recording to be performed. Furthermore, the controller 13 transmits audio data of an audio channel received by the IRD 100 to the MD device 300, and also controls audio recording operation in the MD device 300 to record audio data on an optical magnetic disc mounted thereon. When conducting manual reservation operation for the video or audio recording on the IRD 100, it may be arranged to, for example, display a program guide picture for EPG (Electric Program Guide) on a television receiver (not shown) connected to the IRD 100 and perform reservations by manually operating a GUI (Graphical User Interface) on the basis of the display of the program guide picture on the screen.

The DVCR 200 is a tape recording and playback device capable of recording video data, audio data, and data annexed to them on videotape as digital data and reproducing those data from the videotape. Herein, it is assumed that the DVCR 200 is a recording and playback device using a medium having a format called D-VHS. A controller 21 of the DVCR 200 accepts user's manual operation for ordering video recording or playback, or manual operation for reserving video recording etc. and controls the whole DVCR 200. On the basis of the control of the controller 21, an analog tuner 22 extracts a signal of a predetermined channel from inputted analog signals, converts the signal to digital data, and supplies the digital data to a tape recording and playback section 23. The tape recording and playback section 23 records video data and audio data supplied from the analog tuner 22, or video data and audio data supplied from the IRD 100 or the like via the bus 1 on a magnetic tape.

The MD device 300 is a disc recording and playback device capable of recording audio data and data annexed to the audio data on an optical magnetic disc having a format called mini disc (MD) as digital data and of reproducing the digital data therefrom. A controller 31 of the MD device 300 accepts user's manual operation for ordering video recording or playback or manual operation for reserving audio recording, and controls the whole MD device 300. A disc recording and playback section 32 records audio data, etc. inputted from the bus 1 or another input section on an optical magnetic disc. As to recording on the disc in this case, the audio data, etc. are recorded as data subjected to compression encoding by using the ATRAC scheme. If audio data transmitted via the bus 1 is data of the ATRAC scheme, therefore, the transmitted audio data is recorded on the disc as it is.

Each of the controllers 13, 21 and 31 of the devices 100, 200 and 300 includes a storage section for storing an AV/C descriptor set for the device. In addition, data such as a command required to read and write the description are also stored in the storage section.

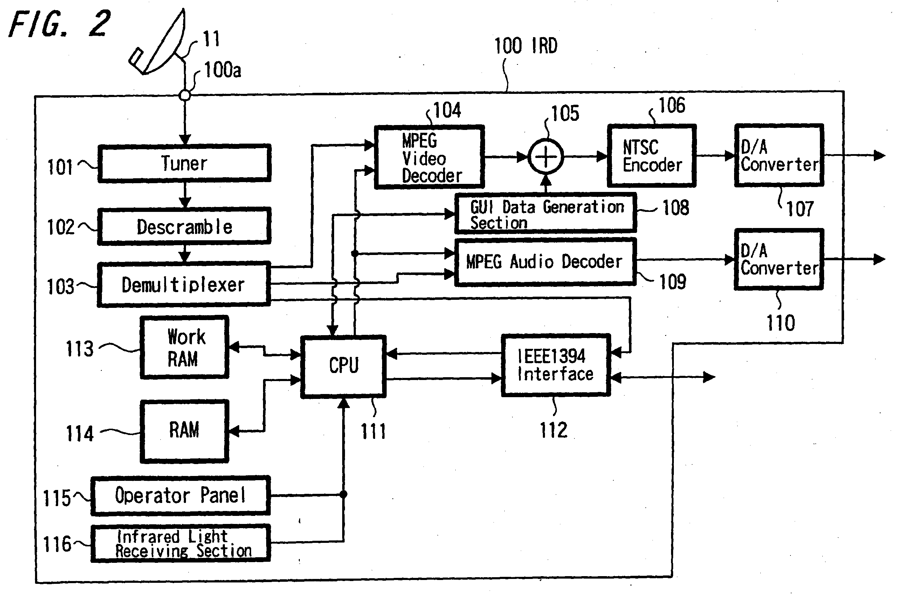

FIG. 2 is a diagram showing a specific configuration example of the IRD 100. A broadcast radio wave from a satellite is received by the antenna 8, inputted to a terminal 100a, and supplied to a tuner 101 serving as program selection means provided in the IRD 100. In the IRD 100, respective circuits operate under the control of a central control unit (CPU) 111. A signal of a predetermined channel is derived by the tuner 101. The received signal derived by the tuner 101 is supplied to a descramble circuit 102. On the basis of cipher key information of a contracted channel stored in an IC card (not shown) which has been inserted into the main body of the IRD 100, the descramble circuit 102 extracts only multiplexed data of the contracted channel (or a channel which is not enciphered) from among the received data, and supplies the multiplexed data to a demultiplexer 103.

The demultiplexer 103 rearranges supplied multiplexed data for each channel, takes out only a channel specified by the user, sends a video stream formed of packets of video portions to an MPEG video decoder 104, and also sends an overlap stream formed of packets of audio portions to an MPEG audio decoder 109.

The MPEG video decoder 104 restores video data before being subjected to compression encoding by decoding the video stream, and sends the video data to an NTSC encoder 106 via an adder 105. The NTSC encoder 106 converts video data to a luminance signal and a color difference signal of the NTSC scheme, and sends these signals as video data of the NTSC scheme to a digital to analog converter 107. The digital to analog converter 107 converts NTSC data to an analog video signal, and supplies the analog video signal to a connected television receiver (not shown).

The IRD 100 of the present example includes a GUI data generation section 108 for generating various video data for display for graphical user interface (GUI) under the control of the CPU 111. The video data (display data) for GUI generated by the GUI data generation section 108 is supplied to the adder 105, and superposed on video data outputted from the MPEG video decoder 104. Thus, the image for GUI is superimposed on the image of the received broadcast.

An MPEG audio decoder 109 restores PCM audio data before being subjected to compression encoding by decoding the audio stream, and sends the PCM audio data to a digital to analog converter 110.

The digital to analog converter 110 converts PCM audio data to an analog signal to generate an L-Ch audio signal and an R-Ch audio signal. The L-Ch audio signal and the R-Ch audio signal are outputted as a sound via a speaker (not shown) of a connected audio playback system.

Furthermore, the IRD 100 of the present example has such a configuration that the video stream and the audio stream extracted by the demultiplexer 103 can be supplied to an IEEE 1394 interface section 112 and sent to the bus line 1 of the IEEE 1394 scheme connected to the interface section 112. The received video stream and audio stream are sent out in an isochronous transfer mode. When the GUI data generation section 108 is generating video data for GUI, the video data is supplied to the interface section 112 via the CPU 111 and the video data for GUI can be sent out from the interface section 112 to the bus line 1.

A work RAM 113 and a RAM 114 are connected to the CPU 111. Control processing is performed by using these memories. Furthermore, an operator command from an operator panel 115 and a remote control signal from an infrared light receiving section 116 are supplied to the CPU 111, and operations based upon various manual operations can be executed. Moreover, the CPU 111 can distinguish commands and responses transmitted from the bus line 1 to the interface section 112.

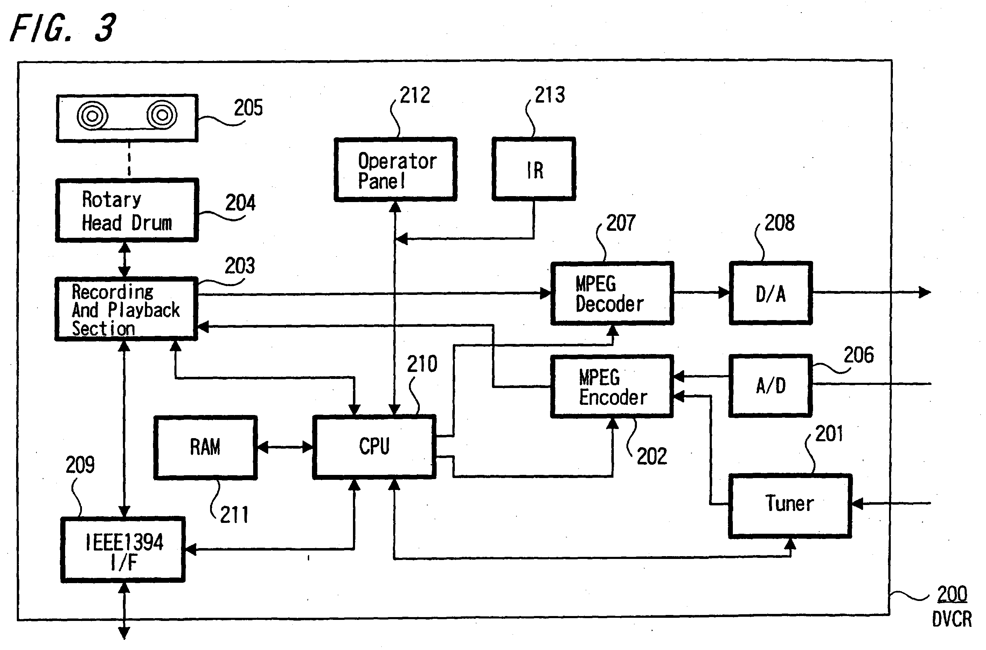

FIG. 3 is a block diagram showing a configuration example of the DVCR 200.

As for the configuration of a recording system, digital broadcast data obtained by receiving a predetermined channel in a tuner 201 incorporated in the DVCR 200 is supplied to an MPEG (Moving Picture Experts Group) encoder 202, and converted to video data and audio data of a scheme suitable for recording, such as the MPEG 2 scheme. If the received broadcast data is data of the MPEG 2 scheme, the processing in the encoder 202 is not performed.

Data encoded by the MPEG encoder 202 is supplied to a recording and playback section 203, and subjected to processing for recording. The data to be recorded thus processed is supplied to a recording head included in a rotary head drum 204, and recorded on magnetic tape in a tape cassette 205.

As for an analog video signal and audio signal inputted from the outside, they are converted to digital data by an analog to digital converter 206, converted to video data and audio data of, for example, the MPEG 2 scheme by a MPEG encoder 202, supplied to the recording and playback section 203, and subjected to processing for recording. The data to be recorded thus processed is supplied to the recording head included in the rotary head drum 204, and recorded on the magnetic tape in the tape cassette 205.

As for the configuration of a playback system, a signal obtained by playing back the magnetic tape in the tape cassette 205 using the rotary head drum 204 is subjected to playback processing in the recording and playback section 203 to produce video data and audio data. The video data and the audio data are supplied to an MPEG decoder 207, and decoded from, for example, the MPEG 2 scheme. The decoded data is supplied to a digital to analog converter 208. An analog video signal and an analog audio signal thus obtained are outputted to the outside.

The DVCR 200 includes an interface section 209 for connection to a bus of the IEEE 1394 scheme. The DVCR 200 is formed in order that video data and audio data supplied from the bus side of the IEEE 1394 scheme to the interface section 209 may be supplied to the recording and playback section 203 and recorded on the magnetic tape in the tape cassette 205. Furthermore, the DVCR 200 is also formed in order that video data and audio data reproduced from the magnetic tape in the tape cassette 205 may be supplied from the recording and playback section 203 to the interface section 209 and sent out to the bus side of the IEEE 1394 scheme.

When transmission is performed via the interface section 209, if the scheme for recording data on a medium (magnetic tape) in the DVCR 200 (such as the above described MPEG 2 scheme) is different from the scheme of the data transmitted on the bus of the IEEE 1394 scheme, scheme conversion may be performed in a circuit in the DVCR 200.

The recording processing and playback processing performed in the DVCR 200 and the transmission processing performed via the interface section 209 are executed under the control of a central control unit (CPU) 210. A memory 211 serving as a work RAM is connected to the CPU 210. Furthermore, operator information from an operator panel 212 and control information from a remote control device in the form of light received by an infrared light receiving section 213 are supplied to the CPU 210 where action control corresponding to the operator information and control information is performed. Moreover, when the interface section 209 has received control data such as an AV/C command described below via the bus of the IEEE 1394 scheme, the data is supplied to the CPU 210 in order that the CPU 210 may perform corresponding operation control.

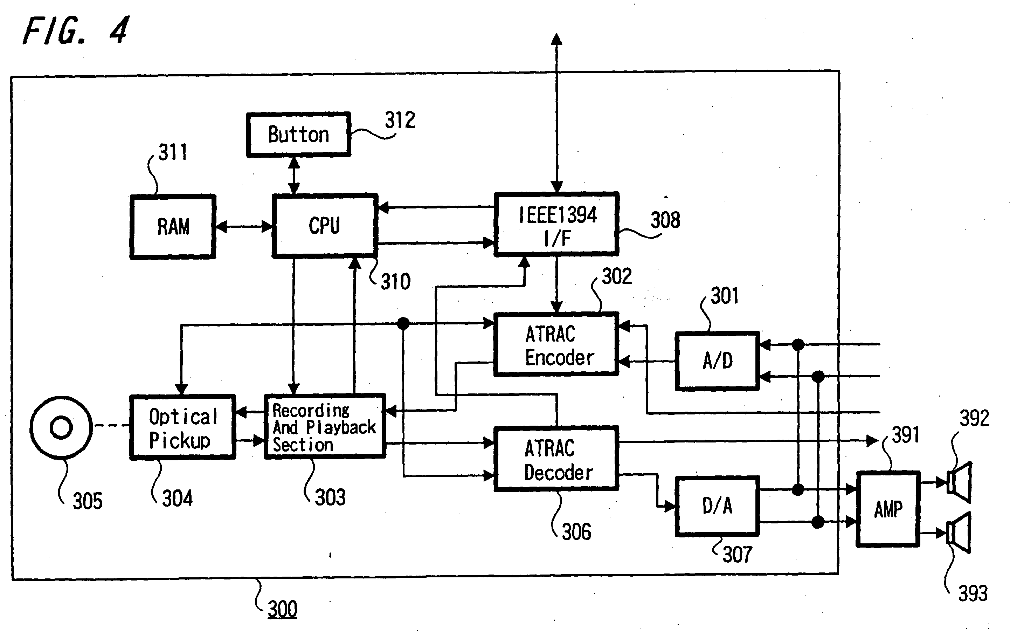

FIG. 4 is a block diagram showing a configuration example of the audio recording and playback device 300. The audio recording and playback device of the present example is a device for recording and reproducing an audio signal and so on as digital data using an optical magnetic disc or an optical disc housed in a package and called MD (mini disc) as a recording medium.

As for the configuration of a recording system, an analog audio signal of two channels inputted from the outside is converted to digital audio data by an analog to digital converter 301. The digital audio data thus obtained by the conversion is supplied to an ATRAC (Adaptive Transform Acoustic Coding) encoder 302. Audio data compressed in the ATRAC scheme is obtained by encoding. In the case where digital audio data is directly inputted from the outside, the inputted audio data is supplied directly to an ATRAC encoder 302 without being passed via the analog to digital converter 301. Data encoded by the encoder 302 is supplied to a recording and playback section 303 and subjected to processing for recording. On the basis of the data thus processed, an optical pickup 304 is driven and data is recorded on a disc (optical magnetic disc) 305. At the time of recording, magnetic field modulation is performed by a magnetic head which is not shown.

As for the configuration of a playback system, data recorded on a disc (optical magnetic disc or optical disc) 305 is read out by the optical pickup 304, and subjected to playback processing in the recording and playback section 303. Audio data compressed in the ATRAC scheme is thus obtained. The reproduced audio data is supplied to an ATRAC decoder 306 and decoded to digital audio data of a predetermined scheme. The decoded audio data is supplied to a digital to audio converter 307, converted to an analog audio signal of two channels, and outputted. In the case where digital audio data is to be outputted directly to the outside, audio data decoded by the ATRAC decoder 306 is outputted directly without being passed via the digital to analog converter 307. The example of FIG. 4 has such a configuration that the output audio signal subjected to analog conversion is supplied to an amplifier device 391 and subjected to audio output processing such as amplification, thus making an audio output of two channels to be emitted from connected speakers 392 and 393.

The audio recording and playback device 300 includes an interface section 308 for connection to the bus of the IEEE 1394 scheme in order that audio data supplied from the bus side of the IEEE 1394 scheme to the interface section 308 may be supplied to the recording and playback section 302 via the ATRAC encoder 302 and recorded on the disc 305. Furthermore, the audio recording and playback device 300 is formed in order that audio data reproduced from the disc 305 may be supplied from the recording and playback section 302 to the interface section 308 via ATRAC decoder 306 and sent out to the bus side of the IEEE 1394 scheme.

The recording processing and playback processing performed in the audio recording and playback device 300 and the transmission processing performed via the interface section 308 are executed under the control of a central processing unit (CPU) 310. A memory 311 serving as a work RAM is connected to the CPU 310. Moreover, operator information from an operator panel 312 is supplied to the CPU 310 where action control corresponding to the operator information is performed. Furthermore, when the interface section 308 has received control data such as an AV/C command described below via the bus of the IEEE 1394 scheme, the data is supplied to the CPU 310 so that the CPU 310 can perform corresponding operation control.

A data transmission state on the bus 1 of the IEEE 1394 scheme connecting the devices 100, 200 and 300 to each other will now be described.

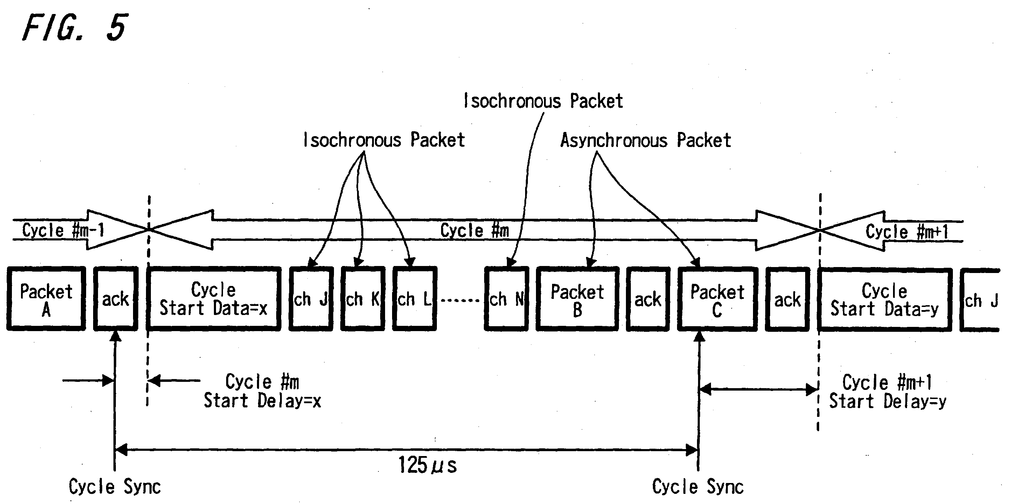

FIG. 5 is a diagram showing a cycle structure of data transmission of devices connected by the IEEE 1394. According to the IEEE 1394, data is divided into packets and the packets are transmitted in a time division manner by taking a cycle having a length of 125 µs as a reference. This cycle is produced by a cycle start signal supplied from a node having a cycle master function (some device connected to the bus). Isochronous packets secure a band (which is called band although it is a time unit) required for transmission from the head of every cycle. In isochronous transmission, therefore, transmission of data in a fixed time is ensured. However, acknowledgment from the receiving side is not performed. If a transmission error occurs, there is no mechanism for protection and data is lost. During time of each cycle which is not used for isochronous transmission, a node which has secured the bus as a result of arbitration sends out asynchronous packets. In this asynchronous transmission, reliable transmission is ensured by using acknowledgment and retry. However, the transmission timing does not become fixed.

In order that a predetermined node may perform isochronous transmission, the node must correspond to the isochronous function. Further, at least one of nodes corresponding to the isochronous function must have a cycle master function. In addition, at least one of nodes connected to the IEEE 1394 serial bus must have an isochronous resource manager function.

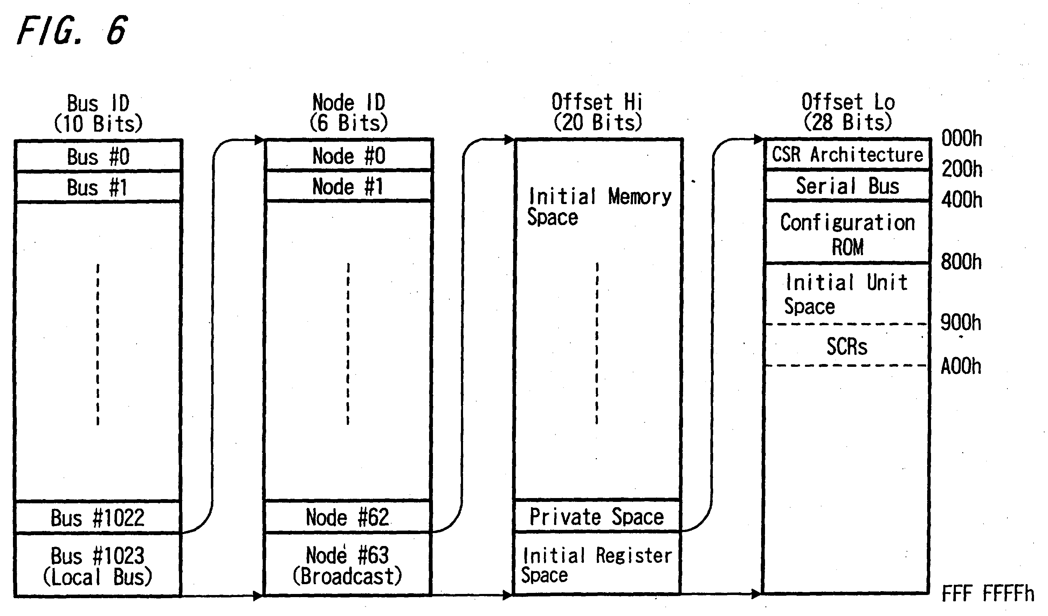

The IEEE 1394 conforms to a CSR (Control & Status Register) architecture having an address space of 64 bits prescribed by ISO/IEC 13213. FIG. 6 is a diagram showing the structure of the address space of the CSR architecture. Sixteen high-order bits are used for a node ID indicating each node on the IEEE 1394. Forty-eight remaining bits are used to specify an address space given to each node. The sixteen high-order bits are further divided into ten bits of a bus ID and six bits of a physical ID (a node ID of a narrow sense). A value having 1 in every bit is used for special purpose. Therefore, 1023 buses and 63 nodes can be specified. Upon bus reset, the node IDs are provided again. The bus reset occurs when the configuration of the devices connected to the bus 1 has changed. For example, when it is recognized that any of the devices connected to the bus 1 is removed or a device is newly connected to the bus 1, bus reset is executed.

In an address space of 256 tera bytes prescribed by forty-eight low-order bits, a space prescribed by twenty high-order bits is divided into an initial register space of 2,048 bytes to be used for registers specific to CSR and registers specific to the IEEE 1394, a private space, an initial memory space and so on. In the case where the space prescribed by twenty high-order bits is the initial register space, it is used as configuration ROMs (read only memories), an initial unit space to be used for application specific to the node, and plug control registers (PCRs) and so on.

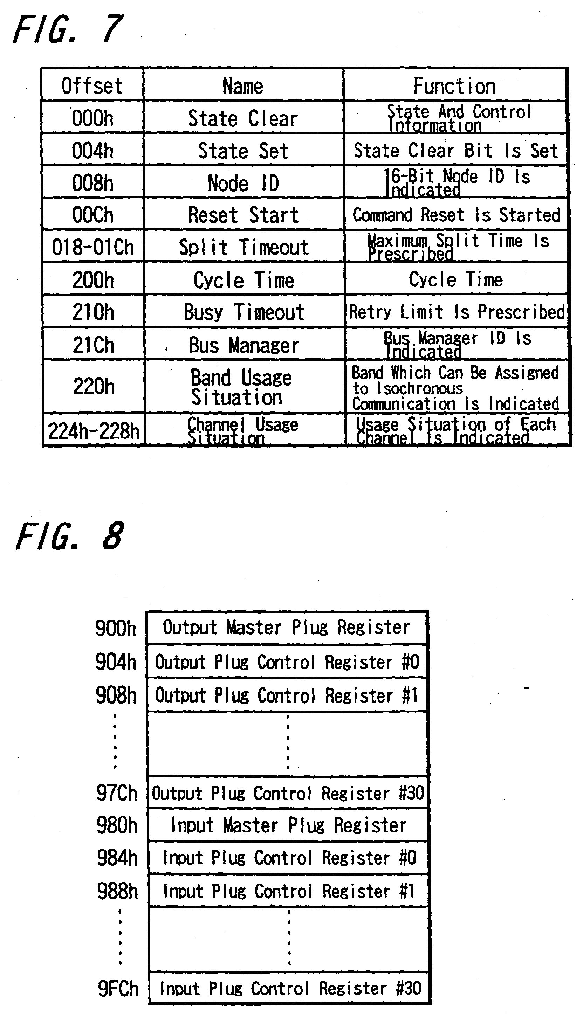

FIG. 7 is a diagram showing offset addresses, names, and functions of principal CSRs. Offset of FIG. 7 denotes an offset address from an address FFFFF0000000h (Numerals having h at their end are expressed by hexadecimal notation.) where the initial register space begins. A bandwidth available register having an offset 220h indicates a band which can be assigned to isochronous communication, and only the value of the node operating as the isochronous resource manager is made valid. That is, each node has CSRs shown in FIG. 6. As to the bandwidth available register, however, only that of the isochronous resource manager is made valid. In other words, substantially only the isochronous resource manager has the bandwidth available register. The bandwidth available register holds a maximum value when no bands are assigned to isochronous communication. Every time a band is assigned, the value is decreased.

In channel available registers of offsets 224h to 228h, respective bits correspond, to channel numbers 0 to 63, respectively. If a bit is 0, it is indicated that the channel has already been assigned. Only the channel available register of the node serving as the isochronous resource manager is valid.

Referring back to FIG. 6, a configuration ROM based upon a general ROM (read only memory) format is arranged in addresses 200h to 400h in the initial register space. In the configuration ROM, a bus info-block, a route directory, and a unit directory are arranged. In a company ID in the bus info-block, an ID number indicating a manufacturer of the device is stored. In a chip ID, there is stored the one and only ID in the world which is unique to the device and which does not have duplication with other devices.

In order to control the input and output of a device via an interface, each node has a PCR (plug control register) prescribed in IEC 1883, in addresses 900h to 9FFh in the initial unit space of FIG. 6. This has been obtained by substantializing the concept of a plug in order to logically form a signal path similar to an analog interface. FIG. 8 is a diagram showing a structure of the PCR. The PCR has an oPCR (output Plug Control Register) representing an output plug and an iPCR (input Plug Control Register) representing an input plug. Furthermore, each PCR has a register oMPR (output Master Plug Register) and a register iMPR (input Master Plug Register) respectively indicating information of an output plug or an input plug specific to the device. Each device does not have a plurality of oMPRs and iMPRs. However, each device is able to have a plurality of oPCRs and iPCRs corresponding to individual plugs, according to the capability thereof. Each of PCRs shown in FIG. 8 has 31 oPCRs and 31 iPCRs. The flow of isochronous data is controlled by operating registers corresponding to these plugs.

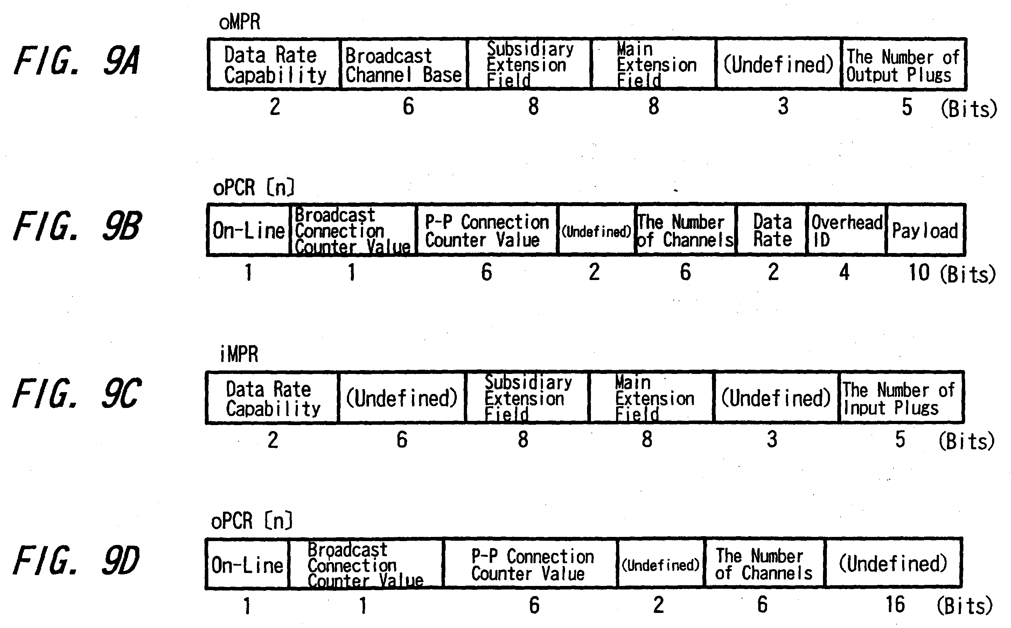

FIG. 9 is a diagram showing structures of the oMPR, oPCR, iMPR and iPCR. FIG. 9A shows a structure of the oMPR. FIG. 9B shows a structure of the oPCR. FIG. 9C shows a structure of the iMPR. FIG. 9D shows a structure of the iPCR. In a 2-bit "data rate capability" of the MSB side of each of the oMPR and iMPR, there is stored a code indicating a maximum transmission rate of isochronous data which can be transmitted or received by the device. A broadcast channel base of the oMPR prescribes the number of a channel to be used for broadcast output.

In a 5-bit "number of output plugs" of the LSB side of the oMPR, there is stored the number of output plugs the device has, i.e., a value indicating the number of oPCRs. In a 5-bit "number of input plugs" of the LSB side of each iMPR, there is stored the number of input plugs the device has, i.e., a value indicating the number of iPCRs. A main extended field and a subsidiary extended field are areas defined for future extension.

An "on-line" of an MSB of each of the oPCRs and iPCR indicates the use of the plug. In other words, the on-line value having "1" indicates that the plug is on-line and the on-line value having "0" indicates that the plug is off-line. A value of a "broadcast connection counter" of each of oPCRs and iPCRs indicates whether there is broadcast connection (1) or not (0). A value of a "point-to-point connection counter" having a 6-bit width in each of oPCRS and iPCRs represents the number of point-to-point connections the plug has. The point-to-point connection (so-called p-p connection) is a connection for performing transmission only between one specific node and another specific node.

A value of a "channel number" having a 6-bit width in each of oPCRs and iPCRs represents the number of isochronous channel to which the plug is connected. A value of a "data rate" having a 2-bit width in each of oPCRs indicates the actual transmission rate of a packet of isochronous data outputted from that plug. A code stored in an "overhead ID" having a 4-bit width in each of oPCRs indicates the bandwidth of the overhead of the isochronous communication. A value of a "payload" having a 10-bit width in each of oPCRS indicates a maximum value of data contained in an isochronous packet the plug can handle.

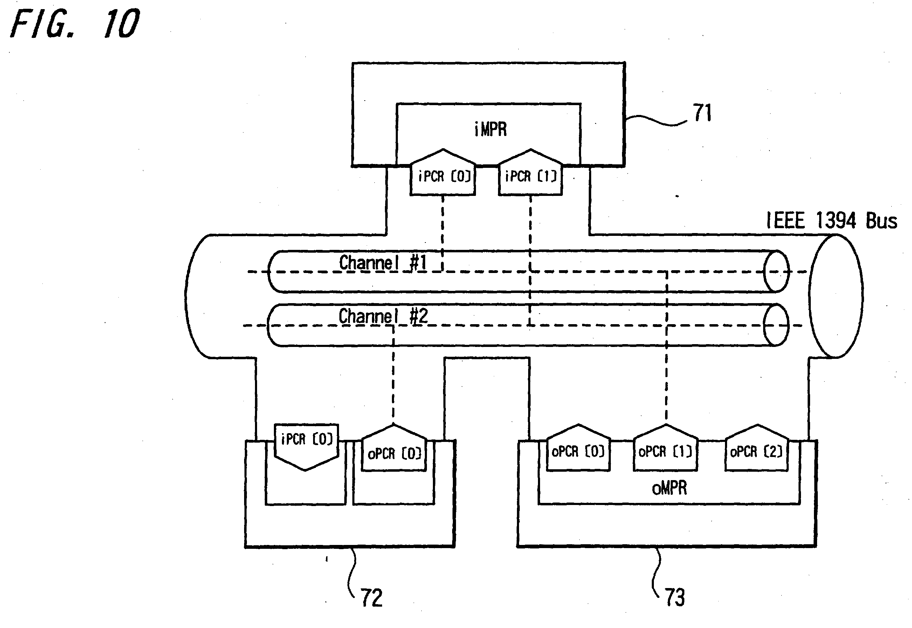

FIG. 10 is a diagram showing relations among plugs, plug control registers, and isochronous channels. In FIG. 10, devices connected to a bus of the IEEE 1394 scheme are shown as AV devices 71 to 73. Isochronous data specified in channel by an oPCR [1] among oPCR [0] to oPCR [2] prescribed in transmission rate and the number of oPCRs by an oMPR of the AV device 73 is sent out to a channel #1 of an IEEE 1394 serial bus. Between iPCR [0] and iPCR [1] prescribed in transmission rate and the number of iPCRs by an iMPR of the AV device 71, the iPCR [0] specifies the input channel #1. The AV device 71 reads isochronous data sent out on the channel #1 of the IEEE 1394 serial bus. In the same way, the AV device 72 sends out isochronous data onto the channel #2 specified by the oPCR [0]. The AV device 71 reads isochronous data from the channel #2 specified by the iPCR [1].

In this way, data transmission is performed between devices connected by the IEEE 1394 serial bus. In the system of the present example, however, control and state decision of respective devices can be performed by utilizing an AV/C command set prescribed as commands for controlling devices connected via the IEEE 1394 serial bus. The AV/C command set will now be described.

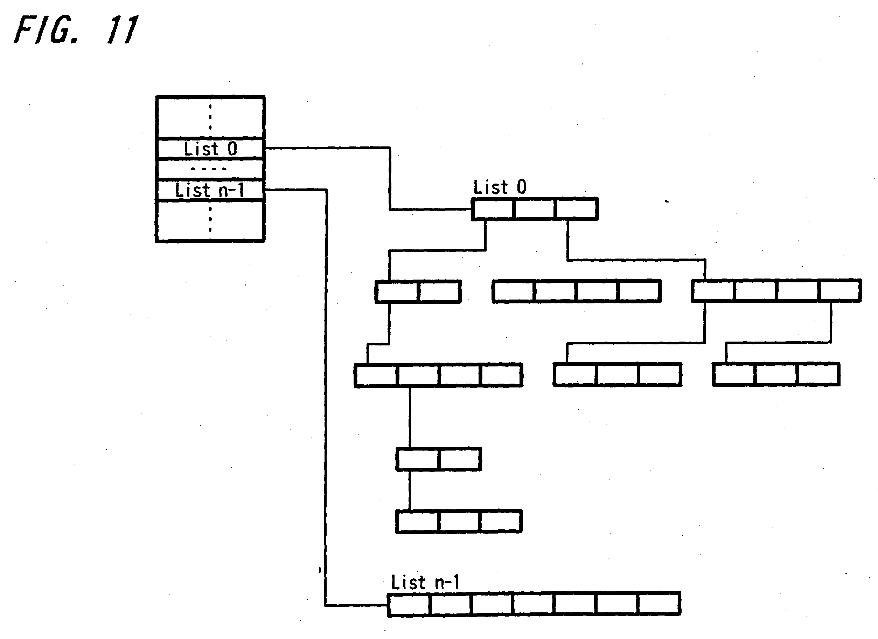

First of all, a data structure of a subunit identifier descriptor in the AV/C command set used in the system of the present example will now be described by referring to FIGS. 1 to 14. FIG. 11 shows the data structure of the subunit identifier descriptor. As shown in FIG. 11, the subunit identifier descriptor is formed of lists each having a hierarchical structure. In case of a tuner, the lists represent channels. In case of a disc, the lists represent music, etc. recorded thereon. A list of the highest layer of a hierarchical structure is called root list. For example, a list 0 becomes a root for its subordinate lists. In the same way, other lists become root lists. There are as many root lists as objects. For example, in the case where AV devices connected to the bus are tuners, objects are channels, etc. in digital broadcast. Furthermore, all lists of one hierarchical layer share common information.

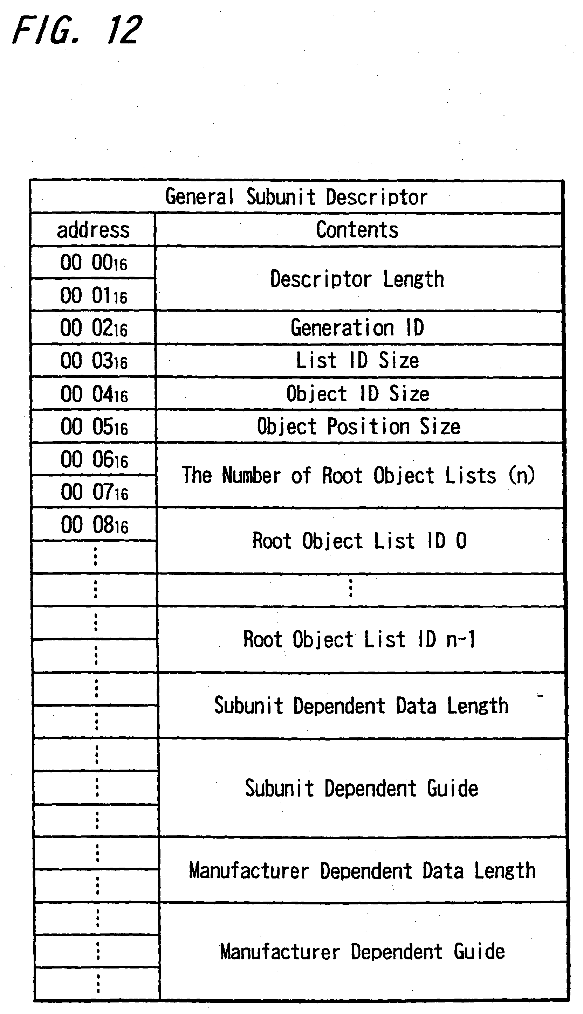

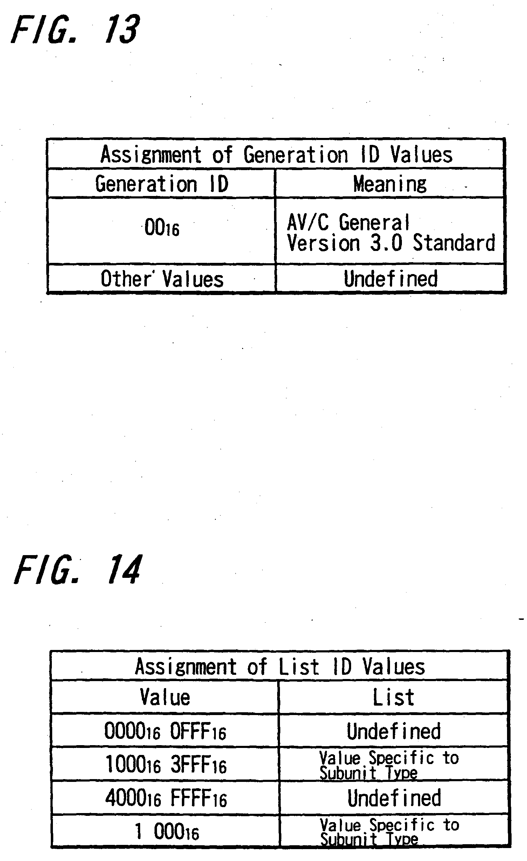

FIG. 12 shows a format of a general subunit identifier descriptor. In the general subunit identifier descriptor, attribute information concerning the function is described as its contents. A "descriptor length field" does not contain the value of its field itself. A "generation ID" indicates the version of the AV/C command set. Its value is, for example, "00h" (where h represents hexadecimal notation). As shown in FIG. 13, for example, "00h" means that the data structure and command conform to version 3.0 of the AV/C General Specification. Furthermore, as shown in FIG. 13, all values except "00h" are reserved and secured for future specifications.

A "size of list ID" indicates the number of bytes of a list ID. A "size of object ID" indicates the number of bytes of an object ID. A "size of object position" indicates the position (the number of bytes) in a list to be used for reference at the time of control. A "number of root object list" indicates the number of root object lists. A "root object list ID" indicates an ID for identifying a root object list of the highest rank of each of independent hierarchical layers.

A "subunit dependent length" indicates the number of bytes of a subsequent "subunit dependent information" field. The "subunit dependent information" field is a field indicating information peculiar to the function. A "manufacturer dependent length" indicates the number of bytes of a subsequent" manufacturer dependent information" field. The "manufacturer dependent information" field is a field indicating specification information of a vendor (manufacturer). If the descriptor does not contain "manufacturer dependent information", the manufacturer dependent information" field is not present.

FIG. 14 indicates the assignment range of list IDs shown in FIG. 12. As shown in FIG. 14, "0000h to 0FFFh" and "4000h to FFFFh" are reserved and secured as assignment ranges for future specifications. In order to identify dependent information of the function type, "1000h to 3FFFh" and "10000h to maximum value of list ID" are prepared.

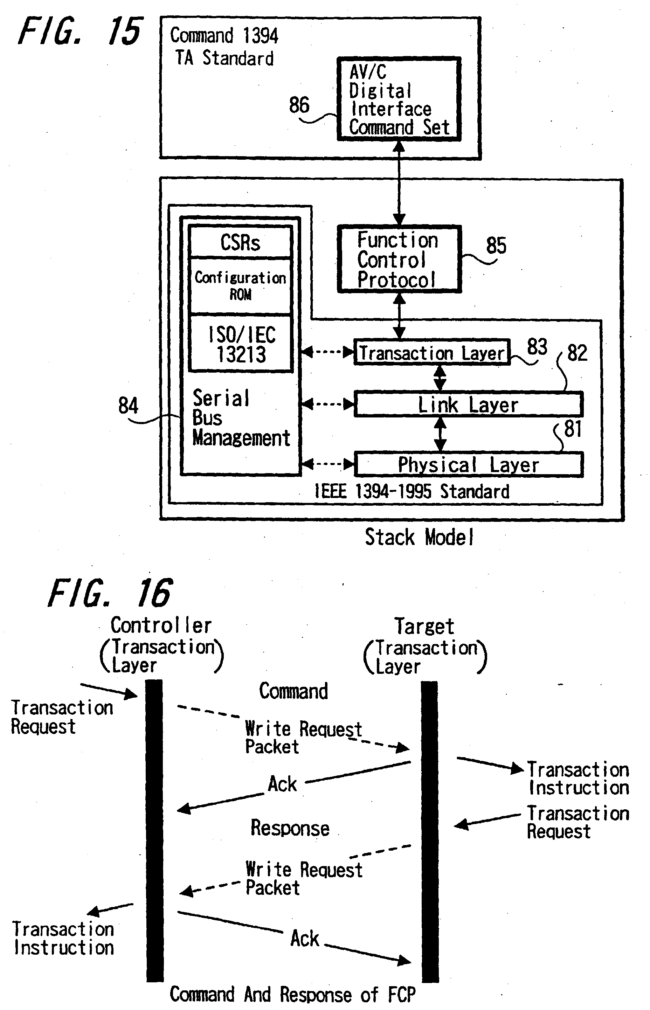

Referring to FIGS. 15 to 20, the AV/C command set used in the system of the present example will now be described. FIG. 15 shows a stack model of the AV/C command set. As shown in FIG. 15, a physical layer 81, a link layer 82, a transaction layer 83, and a serial bus management 84 conform to the IEEE 1394. A FCP (Function Control Protocol) 85 conforms to IEC 61883. An AV/C command set 86 conforms to 1394 TA specifications.

FIG. 16 is a diagram showing a command and a response of the FCP 85 shown in FIG. 15. The FCP is a protocol for performing control of devices (nodes) on the bus of the IEEE 1394 scheme. As shown in FIG. 16, the controlling side is a controller and the controlled side is a target. Command transmission and response of the FCP are performed between nodes using write transaction of asynchronous communication of the IEEE 1394. Upon receiving data, the target returns an acknowledgement to the controller for acknowledging the reception.

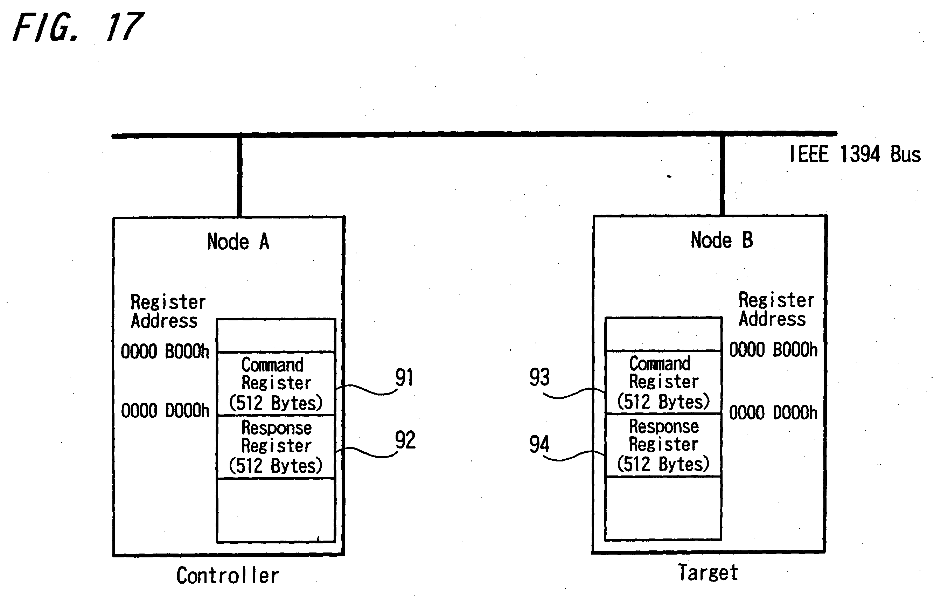

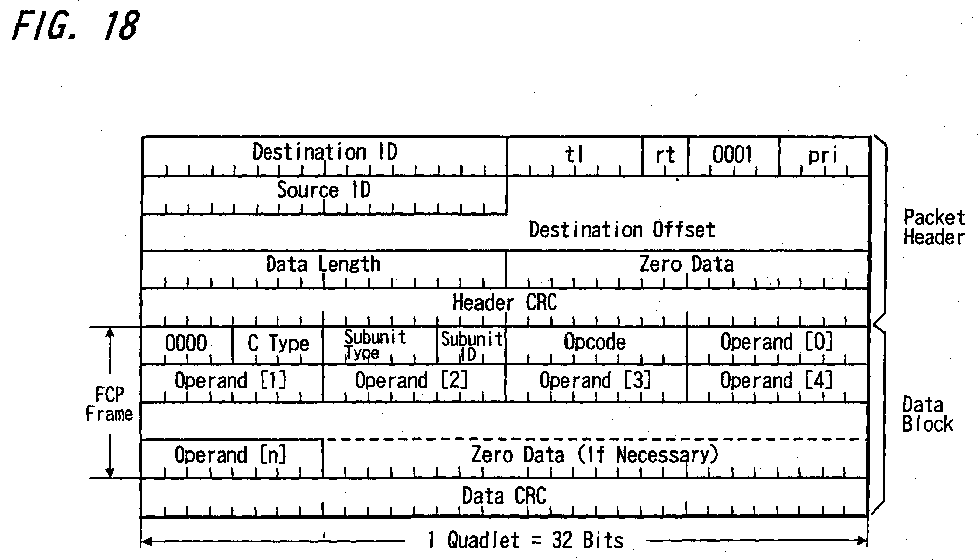

FIG. 17 is a diagram showing the relation between the command and response of the FCP of FIG. 16 in more detail. A node A and a node B are connected via an IEEE 1394 bus. The node A is the controller, and the node B is the target. In both the node A and the node B, a command register and a response register each having 512 bytes are prepared. As shown in FIG. 17, the controller conveys instructions by writing a command message into a command register 93 of the target. On the other hand, the target conveys a response by writing a response message into a response register 92 of the controller. For the two messages, control information is exchanged. The kind of a command set sent by the FCP is described in CTS included in a data field shown in FIG. 18 to be described below.

FIG. 18 shows a data structure of a packet transmitted in an asynchronous transfer mode of the AV/C command. The AV/C command set is a command set for controlling an AV device, and its CTS (ID of command set) = "0000". AV/C command frames and response frames are exchanged between the nodes using the above described FCP. In order to prevent casting a burden upon the bus and the AV device, a response to a command is defined to be sent within 100 ms. As shown in FIG. 18, data of an asynchronous packet has 32 bits (= 1 quadlet) in the horizontal direction. Upper columns of FIG. 18 show a header portion of the packet, and lower columns of FIG. 18 show a data block. A destination ID indicates the destination.

The CTS indicates an ID of the command set. In the AV/C command set, CTS = "0000". A C type/response field indicates a function class of a command when the packet is a command, and a processing result of a command when the packet is a response. Commands are broadly divided into four kinds: (1) commands for controlling the function from the outside (CONTROL); (2) commands for inquiring about the state from the outside ( STATUS); (3) commands from the outside for inquiring whether support of a control command is present (GENERAL INQUIRY ( whether support of an opcode is present) and SPECIFIC INQUIRY (whether support of an opcode and operands are present)); and (4) commands for requesting to notify a state change to the outside (NOTIFY).

A response is returned according to the command kind. As responses to the CONTROL commands, there are "NOT IMPLEMENTED", "ACCEPTED", "REJECTED" and "INTERIM". As responses to the STATUS commands, there, are "NOT IMPLEMENTED", "REJECTED", "IN TRANSITION", and "STABLE". As responses to the commands for inquiring from the outside whether support of a command is present, (GENERAL INQUIRY and SPECIFIC INQUIRY), there are "IMPLEMENTED" and "NOT IMPLEMENTED". As responses to the commands for requesting to notify a state change to the outside, there are "NOT IMPLEMENTED", "REJECTED", "INTERIM", and "CHANGED".

A "subunit type" is provided to specify a function in the device. For example, "tape recorder/player", "tuner", or the like is assigned. Besides the function corresponding to the device, BBS (bulletin board subunit) which is a subunit opening information to other devices is also assigned to the "subunit type". In order to distinguish in the case where there are a plurality of subunits of the same kind, addressing is performed using a subunit ID as a distinguishing number. An "opcode" which is a code of operation represents a command. An "operand" represents a parameter of the command. Additional operands which are added as occasion demands are also prepared. After the operands, "0" data or the like are added as need arises. A Data CRC (Cyclic Redundancy Check) is used for error check at the time of data transmission.

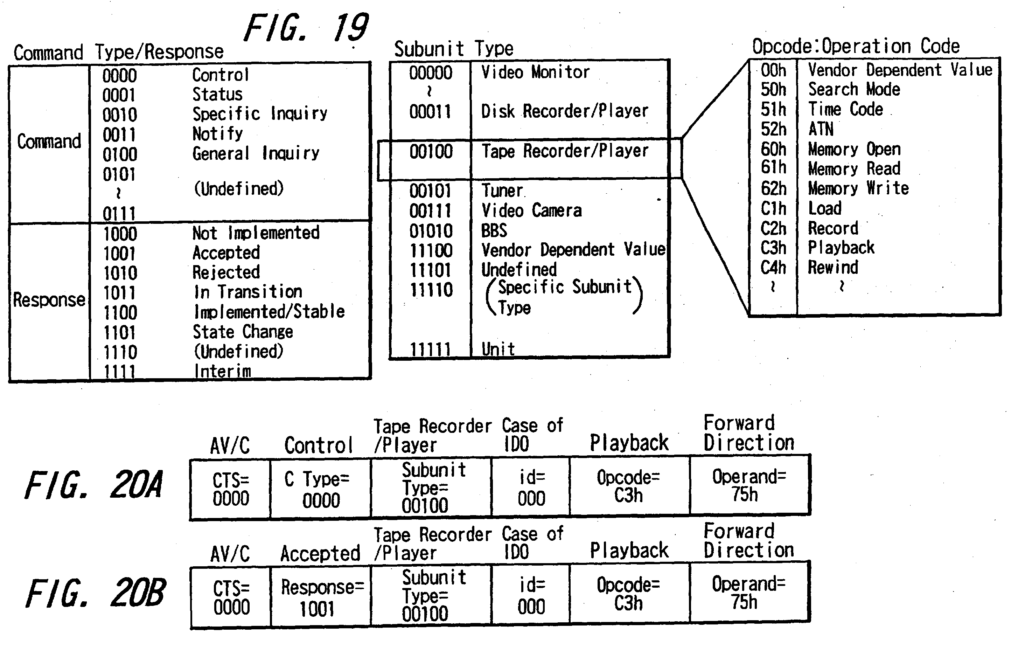

FIG. 19 shows a concrete example of the AV/C command. The left side of FIG. 19 shows concrete examples of c type/response. Its upper column shows commands and its lower column shows responses. "CONTROL" is assigned to "0000". "STATUS" is assigned to "0001". "SPECIFIC INQUIRY" is assigned to "0010". "NOTIFY" is assigned to "0011". "GENERAL INQUIRY" is assigned to "0100". "0101 to 0111" are reserved and secured for future specifications. "NOT IMPLEMENTED" is assigned to "1000". "ACCEPTED" is assigned to "1001". "REJECTED" is assigned to "1010". "IN TRANSITION" is assigned to "1011". "IMPLEMENTED/STABLE" is assigned to "1100". "CHANGED" is assigned to "1101". "INTERIM" is assigned to "1111". "1110" is reserved and secured for future specifications.

The center of FIG. 19 shows concrete examples of the subunit type. "Video monitor" is assigned to "00000". "Disc recorder/player" is assigned to "00011". "Tape recorder/player" is assigned to "00100". "Tuner" is assigned to "00101". "Video camera" is assigned to "00111". A subunit called BBS (Bulletin Board Subunit) and used as a bulletin board is assigned to "01010". A manufacturer dependent subunit type (Vender unique) is assigned to "11100". A specific subunit type (Subunit type extended to next byte) is assigned to "11110". "Unit" is assigned to "11111", and it is used when the command or response is sent to the device itself. For example, turning on and off of the power supply can be mentioned.

The right side of FIG. 19 shows concrete examples of opcodes (operation codes). For each of the subunit types, a table of opcodes exists. In FIG. 19, opcodes in the case where the subunit type is the "tape recorder/player" are shown. Furthermore, for each opcode, an operand is defined. Here, a manufacturer dependent value (Vender dependent) is assigned to "00h". "Search mode" is assigned to "50h". "Time code" is assigned to "51h". "ATN" is assigned to "52h". "Open memory" is assigned to "60h". "Memory reading" is assigned to "61h". "Memory writing" is assigned to "62h". "Loading" is assigned to "C1h". "Audio recording" is assigned to "C2h". "Reproducing" is assigned to "C3h". "Rewinding" is assigned to "C4h".

FIG. 20 shows concrete examples of an AV/C command and an AV/C response. For example, in the case where a playback command is to be given to a playback device serving as the target (consumer), the controller sends the command as shown in FIG. 20A to the target. In this command, CTS = "0000" because the AV/C command set is used. Since the command (CONTROL) for controlling a device from the outside is used, the c type becomes c type = "0000" (see FIG. 19). Since the subunit type is a tape recorder/player, it follows that subunit type = "00100" (see FIG. 19). Furthermore, "id" indicates the case of ID0, and id = 000. The opcode becomes "C3h" meaning the playback (See FIG. 19). The operand becomes "75h" meaning the forward direction (FORWARD). Upon playback, the target returns a response as shown in FIG. 20B to the controller. Since "accepted" is included in the response, it follows that response = "1001" (see FIG. 19). Except the response, other fields are the same as those of FIG. 20A, and description thereof will be omitted.

It is now assumed that data transmission based upon the AV/C command is performed in the system of the present example heretofore described. Processing of recognizing a device connected to the bus 1 will now be described.

First, in the network system formed by connecting devices with the bus 1 of the IEEE 1394 scheme, each device has an individual node unique ID as already described. Apart from the node unique ID, a node ID is set within the network. Upon bus reset, the node ID is set individually for the device of each node unique ID.

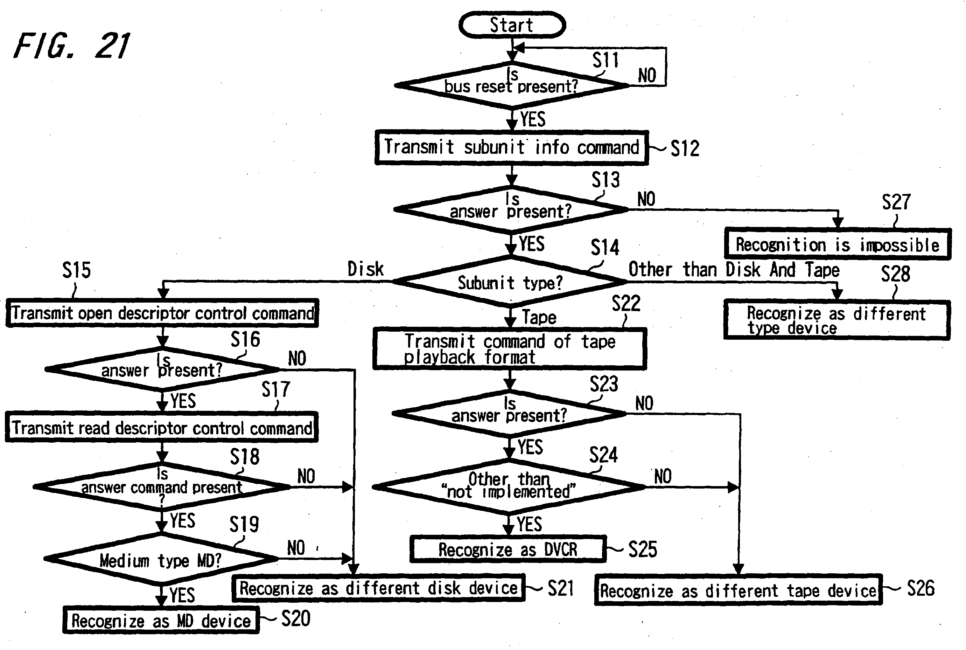

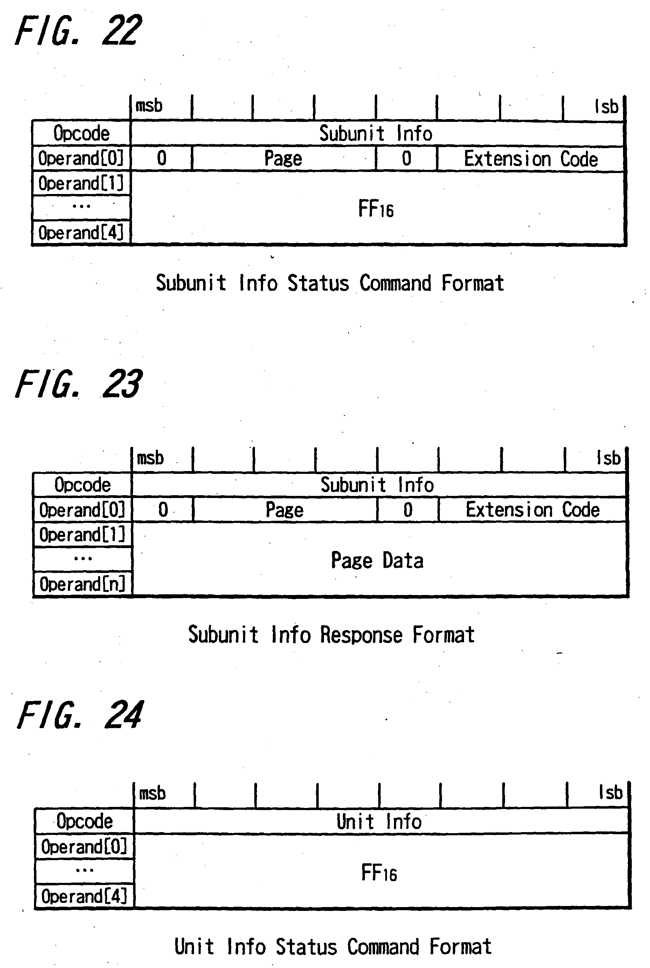

If there is bus reset, in case of the present example, the controller 13 in the IRD 100 performs processing of discriminating the kinds of other devices connected to the bus 1 (the DVCR 200 and the MD device 300) by using a command and a descriptor prescribed in the AV/C command. Hereafter, the processing of discriminating the kind of the connected device will be described with reference to a flow chart of FIG. 21 and data structures of FIG. 22 and subsequent drawings.

First, as shown in the flow chart of FIG. 21, the controller 13 in the IRD 100 determines whether or not bus reset processing of resetting the node ID of the bus 1 and so on has been performed (step S11). Upon deciding the bus reset to have been performed, the controller 13 transmits a SUBUNIT INFO command prescribed in AV/C command successively to devices connected to the bus 1 (step S12). Details of the SUBUNIT INFO command will be described below. The SUBUNIT INFO command is a command that devices corresponding to AV/C command need to necessarily implement. When there is a correct answer to this command, the device of the opposite party is known to be a device corresponding to the AV/C command. By the way, the command transmitted here need not be the SUBUNIT INFO command, but need only be a command the device corresponding to the AV/C command necessarily implements.

After the controller 13 in the IRD 100 has transmitted the SUBUNIT INFO command, the controller 13 determines whether or not response data prescribed in AV/C has been returned to the IRD 100 (step S13). If response data is not transmitted, the controller 13 decides on discrimination of the pertinent device using the AV/C command to be impossible (step S27).

When answer data is transmitted at step S13, the controller 13 decides the subunit type indicated by the answer data (step S14). Details of the subunit type which can be discriminated will be described below. In the AV/C command, however, it is possible to discriminate at least a unit (device) of such a type that a disc is handled as the medium, a unit (device) of such a type that tape (magnetic tape) is handled as the medium, and a unit (device) of other type.

If the decision of the controller 13 at step S14 is that the subunit of the opposite party unit in communication is one of such a type that a disc is handled as the medium, then the controller 13 performs processing of reading out a descriptor that the opposite party has. In order to read out the descriptor, the controller 13 transmits first a command of OPEN descriptor control which is a command for opening the descriptor of the pertinent unit (step S15).

The controller 13 then determines whether or not there is a return from the pertinent device for the transmission of this command (step S16). If there is a return, the controller 13 transmits a command of READ descriptor control which is a command for reading out the opened descriptor (step S17).

Furthermore, the controller 13 determines whether or not there is a return from the pertinent device for the transmission of the command (step S18). If there is a return, the controller 13 decides contents of data of the medium type included in data of the returned descriptor, and determines whether it is a code of a medium type of MD (step S19). Upon deciding on the code to be an MD code, the controller 13 of the IRD 100 recognizes the pertinent device as an MD device (step S20). If there is no return command at the step S16 or S18, or if the medium type is decided not to be MD at the step S19, the controller 13 recognizes the pertinent device as a disc device handling a disc of another format (step S21).

If the subunit unit of the opposite party unit in communication is decided at the step S14 by the controller 13 to be one of the type handling tape as its medium, then the controller 13 performs processing of inquiring about the format used by the opposite party to play back the tape. In other words, the controller 13, transmits a status command of a TAPE PLAYBACK FORMAT for inquiring about the tape playback format on the bus 1 (step S22).

Then, the controller 13 determines whether or not there is a return from the pertinent device for the transmission of this command (step S23). If there is a return, the controller 13 determines whether the inquiry about the tape playback format is valid. To be concrete, the controller 13 determines whether or not the return is a response other than the response "NOT IMPLEMENTED" which is a response of being not able to respond to the transmission of the status command at the step S22 (step S24).

When the controller 13 has decided on the response to be a response other than "NOT IMPLEMENTED", the controller 13 recognizes the pertinent unit as a DVCR of the D-VHS standards (step S25). If there is no answer command at the step S23, or if the response is decided to be a response of "NOT IMPLEMENTED", the controller 13 recognizes the device as a tape device which handles tape of a different format (step S26).

Furthermore, if the subunit type is decided to be other than a disc and tape at the step S14, the controller 13 recognizes the device as a device of another different type (step S28).

The IRD 100 executes the processing heretofore described successively for respective devices connected to the bus 1, to discriminate the kinds, etc. of all devices connected to the bus 1.

The subunit info status command in the AV/C command is defined by a format shown in FIG. 22. In FIG. 22, eight bits are shown as one unit (a row shown in the figure). (This also holds true in format diagrams of FIG. 23 and subsequent drawings.) The subunit info response in the AV/C command is defined by a format shown in FIG. 23. Data of opcodes and operands shown in FIGS. 22 and 23 are arranged in the fields of the opcode and operands in the FCP frame included in the packet shown in FIG. 18. In the subunit info status command shown in FIG. 22, subunit info data is disposed as the opcode. Data of a page and an extension code are arranged in an area of an operand [0]. In an area of an operand [1] and subsequent operands, a specific value (here in FF) is disposed. In the response to this command, page data is disposed in an area of an operand [1] and subsequent operands as shown in FIG. 23. Areas of the opcode and an operand [0] of the response are the same as those of the command.

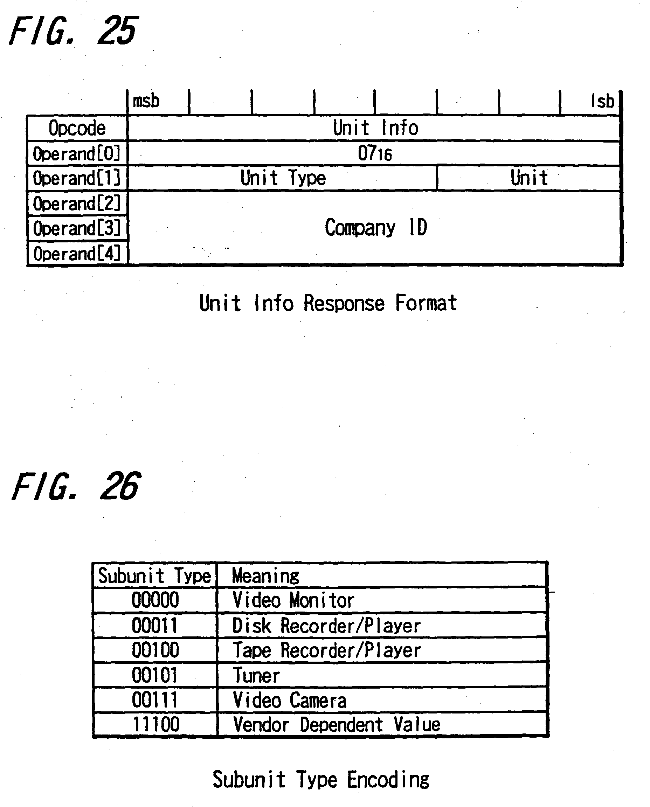

In the example of the flow chart of FIG. 21, the subunit type is inquired to decide the kind of the device. However, the unit type may be inquired. A unit info status command for inquiring about the unit type is defined by a format shown in FIG. 24. A unit info response serving as its answer is defined by a format shown in FIG. 25. In the unit info status command shown in FIG. 24, unit info data is disposed as the opcode. In an area of an operand [0] and subsequent operands, a specific value (here in FF) is arranged. In the response to this command, data of the unit type and the unit are arranged in an area of an operand [1] as shown in FIG. 25. Furthermore, in operands [2] to [4], a company ID which is a code provided to each company which has manufactured each device (unit) is disposed.

Some of codes concerning the subunit type prescribed in the AV/C command are shown in FIG. 26. FIG. 26 shows again some of the subunit types already shown in FIG. 19. Herein, video monitor, disc recorder and/or player, tape recorder and/or player, tuner, video camera, and so on are prescribed as subunit types. Furthermore, a subunit type having a special format prescribed for each company is prescribed as a vendor unique value. By deciding the data of this subunit type, the controller 13 of the IRD 100 can determine the type of the subunit that the device of the opposite party has.

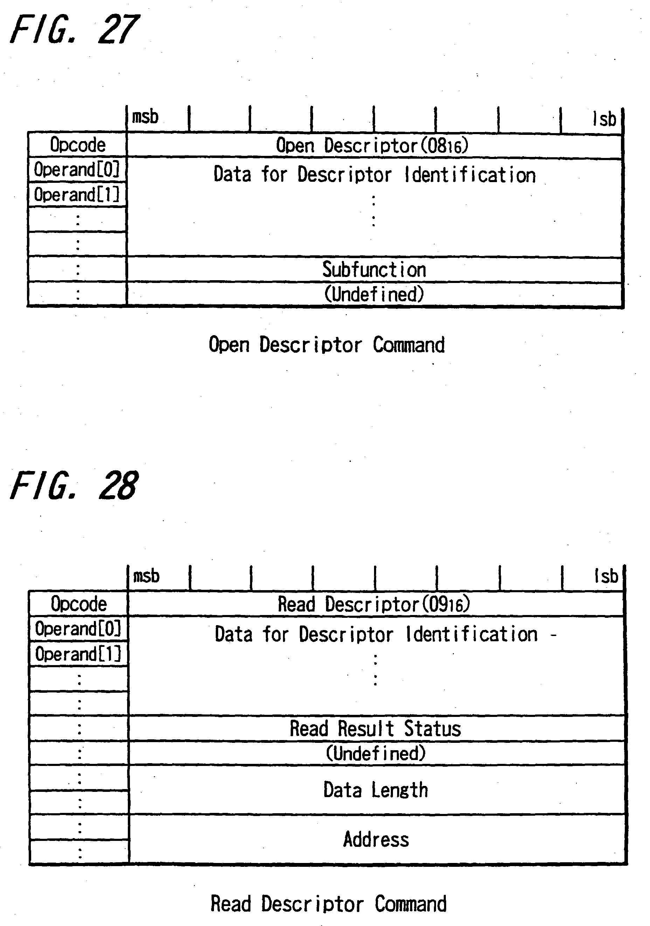

In case of the AV/C command, a command for opening the descriptor (open descriptor command) required after a decision of the subunit type has been made if the decided type is "disc" is prescribed in a format shown in FIG. 27. In this open descriptor command, data indicating an open descriptor is disposed as the opcode, and data for descriptor identification and data of subfunction are arranged as the operands. In case of the AV/C command, a command for reading out the descriptor (read descriptor command) after the descriptor has been opened by the open descriptor command is prescribed in a format shown in FIG. 28. In this read descriptor command, data indicating a read descriptor is disposed as the opcode, and data for descriptor identification, data of read result status, data length, and data of read address are arranged as the operands.

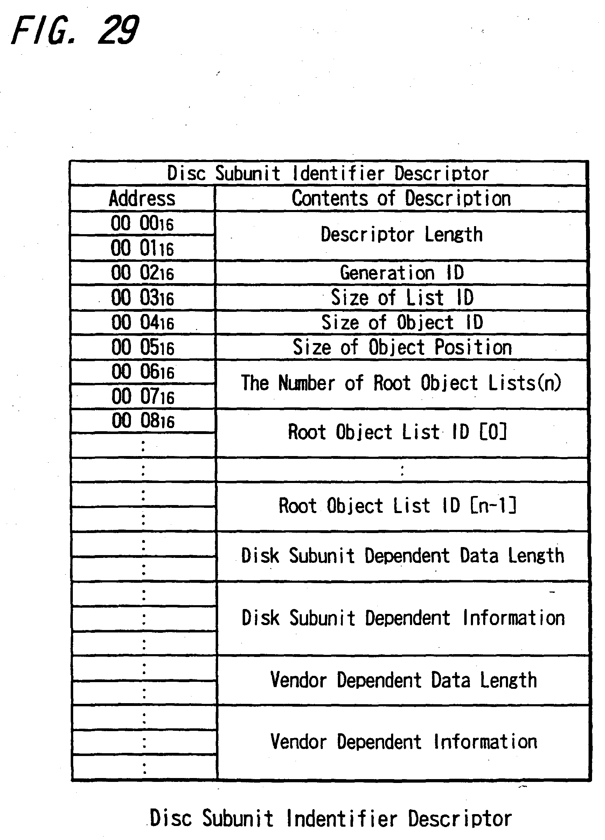

FIG. 29 is a diagram showing a structure example of a descriptor of a disc type subunit in the AV/C command read out by the above described command. The descriptor has data of a hierarchical structure. An example of a disc subunit identifier descriptor is shown in FIG. 29. For example, a descriptor length, a generation ID, a size of a list ID, a size of an object ID, a size of an object position, the number of root object lists, root object list IDs, a data length of data unique to the disc subunit, information unique to the disc subunit, a data length of data unique to a manufacturing maker, and information unique to the manufacturing maker are arranged. As to the root object list IDs, as many root object list IDs as indicated by the number of root object lists are disposed.

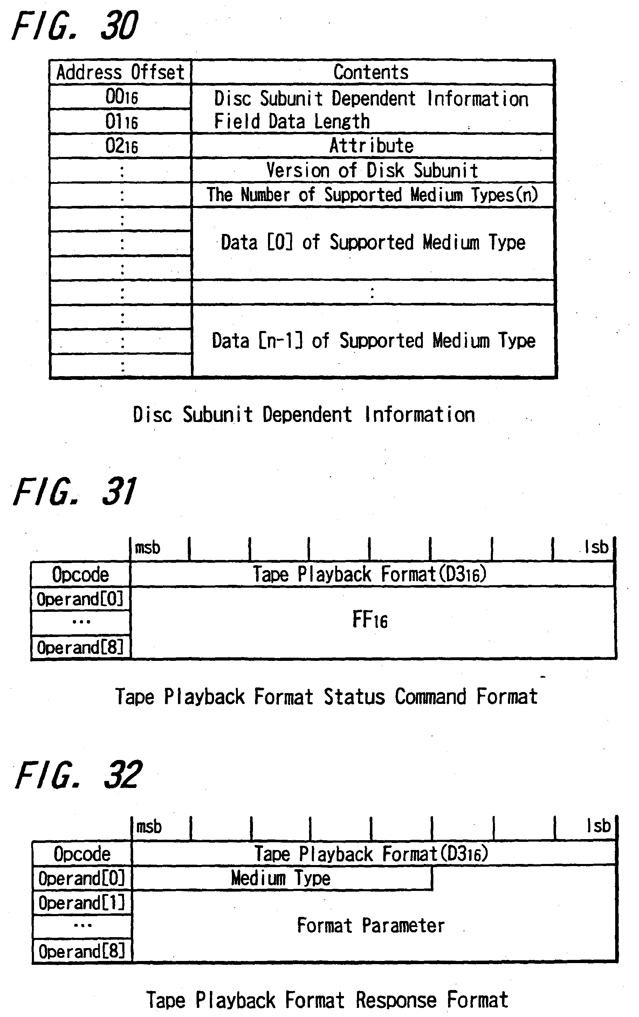

As to data of disc subunit dependent information which is information unique to a disk subunit contained in the disk subunit identifier descriptor, it has a structure shown in FIG. 30. An address offset shown in FIG. 30 is an offset value of an address from art operand in which a head portion of the data of the disc subunit dependent information is disposed. As the information, a data length of an information field unique to the disk subunit, an attribute, a version of the disk subunit, the number of supported medium types, and data of supported medium type are arranged. As to the data of supported medium type, as many data of supported medium type as indicated by the number of supported medium types are arranged. By the data of supported medium type, details of the medium format are indicated. In case of the present example, it is known from the data that the device is a disc device which uses a disc having a format of MD (mini disc) as the medium.

FIG. 31 shows, a format of a data structure of a status command having a TAPE PLAYBACK FORMAT for inquiring the tape playback format required after the decision of the subunit type if the decided type is tape. In this command, data of the tape playback format is disposed in the opcode, and a specific value (here in FF) is disposed in the operands.

Then, the format of a response for this status command is shown in FIG. 32. In this response, a medium type and data of format parameters are arranged in the area of the operands. The response at this time is indicated by one of response types already shown in FIG. 19. To be concrete, a response for a status command in the AV/C command is one of "NOT IMPLEMENTED", "REJECTED", "IN TRANSACTION", and "STABLE".

In case of a DVCR having a format of a D-VHS corresponding to the AV/C command, the response does not become "NOT IMPLEMENTED" which is a response of disabling the answer to transmission of the status command. Depending on the device state at that time, the response becomes one of "REJECTED", "IN TRANSITION", and "STABLE". By deciding on the response to be other than "NOT IMPLEMENTED", the device is known to be a DVCR having a format of the D-VHS. In case of a tape device of another different format (such as a DVCR called DV standard), a status command of the TAPE PLAYBACK FORMAT is not implemented, and consequently the response becomes "NOT IMPLEMENTED" meaning that answering is impossible.

When a network system is formed by connecting devices controlled by the AV/C command to the bus 1, by performing the processing described heretofore with reference to the present embodiment, it is possible to know details of the kinds of devices, such as types and medium formats without previously knowing what protocols the devices connected to the network correspond to. It becomes possible to execute functions which can be executed only for devices having specific medium formats connected to the network without user's operation of setting the device type and so on.

In the above described embodiment, the subunit type is first inquired using the subunit info command in order to determine whether or not a device connected to the network corresponds to the AV/C command. However, the protocol and command set used by the device connected to the network may be ascertained by different processing.

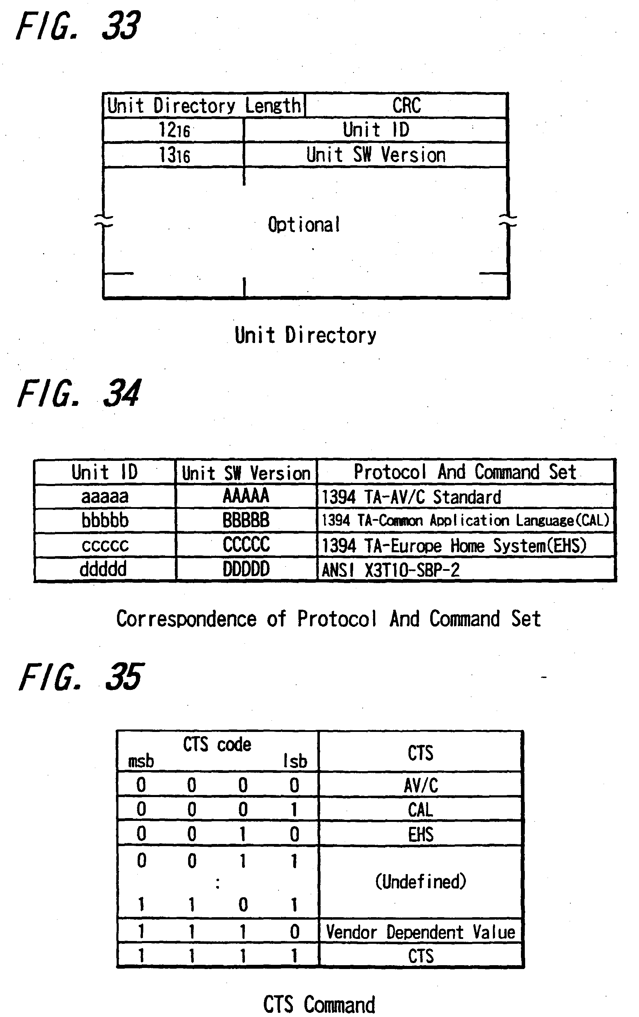

For example, it may be determined from the data of the configuration ROM a node (unit) connected to the network has whether or not the device corresponds to the AV/C command. In other words, data on the unit attribute of the configuration ROM prescribed by, for example, IEEE 1212 has a data structure of a format shown in FIG. 33. By a combination of data of unit ID (unit spec id) and data of unit sw version included in the data on the unit attribute, the corresponding protocol and command set are determined as shown in FIG. 34. To be concrete, it is known from these data which of, for example, the standard of AV/C command standardized by 1394TA, standard of common application language (CAL) standardized by 1394TA, standard of Europe home system (EHS) standardized by 1394TA, and standard of ANSI the protocol and command set conform to. When it is known from the correspondence between data of the unit ID and data of the unit SW version that the protocol and command set correspond to the AV/C command, details of the unit may be inquired.

Moreover, after deciding on the protocol and command set, to correspond to the AV/C command from the correspondence shown in FIG. 34, the processing of and after the step S12 of the flow chart shown in FIG. 21, i.e., the processing of sending the status command of the subunit and subsequent processing may be executed.

Furthermore, in the case where it is determined from different data whether or not the connected device corresponds to the AV/C command and in the decision the connected device is decided to correspond to the AV/C command, the detailed subunit type and medium format may be inquired. For example, as shown in FIG. 35, a code value of the CTS command is determined . It may be decided whether or not the connected device corresponds to the AV/C command on the basis of the code value of the CTS command. The code value of the CTS command is disposed in a four-bit section (a portion represented as 0000) at the head of a FCP frame shown in FIG. 18. In this case, if the code value of the CTS command is "0000", it is known that the connected device corresponds to the AV/C command.

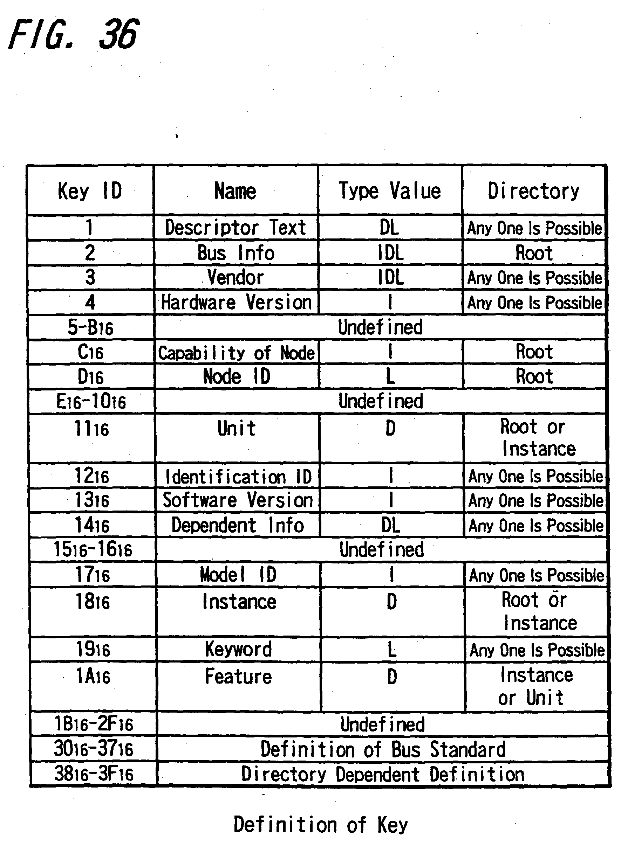

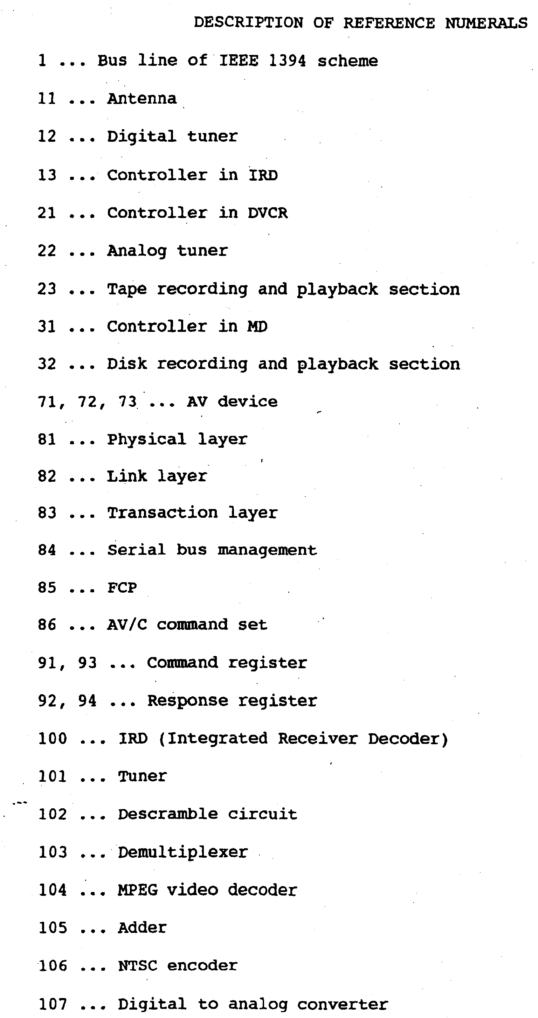

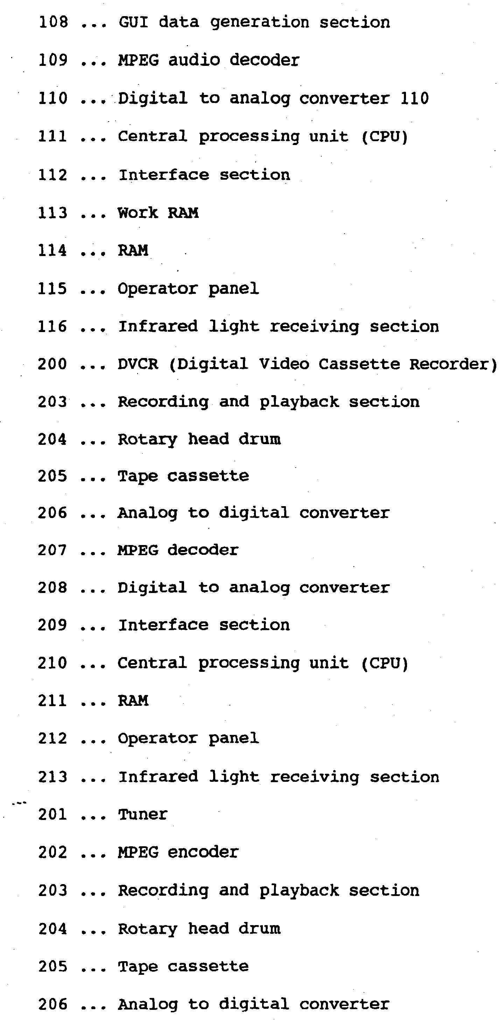

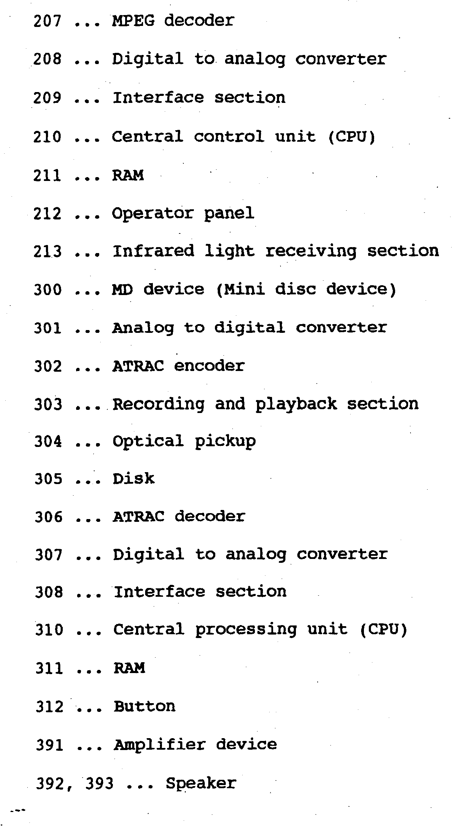

Furthermore, each data of the configuration ROM prescribed by the IEEE 1212 is provided with a key ID as shown in FIG. 36. By reading the data of the model ID included in the key ID, details such as the type of the device may be decided directly.

In the above described embodiment, the case where details of the DVCR and MD device are decided in the IRD connected thereto via a network formed by a bus of the IEEE 1394 scheme has been described. However, the present invention can also be applied to the case where details of other devices are decided. In addition, the network configuration is not limited to the above described example so long as such a data structure is used that similar processing can be performed.

## Claims

1. A network connection recognition method for recognizing a device connected to a predetermined network, said network connection recognition method executing:
first processing of sending a command to an opposite party connected via said network to inquire a unit type or a subunit type;
second processing of sending a command corresponding to a type discriminated based on a response obtained by said first processing; and
third processing of determining a kind of the device based on a response obtained by said second processing.

2. The network connection recognition method according to claim 1, wherein
said second processing is processing of sending a command for opening a descriptor of said opposite party and processing of sending a command for reading out the opened descriptor, and a medium type of the device is determined based on the readout.

3. The network connection recognition method according to claim 1, wherein
said second processing is processing of sending a command for inquiring a format of a medium, and when there is a correct response for the command, the device is determined to be a device of a predetermined medium format.

4. The network connection recognition method according to claim 1, wherein
said processing of recognizing the device is executed after node IDs of devices connected to said network are acquired, when a bus line forming said network is reset.

5. A network system formed by connecting a plurality of terminal devices via a predetermined network, said network system comprising as a first terminal device in said network:
a command storage section for storing a first command to be used to inquire of a specific terminal device connected via said network about a unit type or a subunit type, and a second command prepared so as to correspond to a type discriminated based on a response to said first command; and
a network control section for successively sending out the first command and the second command stored in said command storage section to said network, and determining a kind of a device of an opposite party based on a response thereto,
said network system comprising as a second terminal device in said network:
a data transmission section responsive to discrimination of said first command sent out from said first terminal device, for sending a first response to which data of a unit type or subunit type that the second terminal device has is added, and responsive to discrimination of said second command after transmission of the first response, for sending a second response to which data specified by said second command is added.

6. The network system according to claim 5, wherein:
said second terminal device comprises a descriptor storage section for storing data on a configuration of the device as a descriptor;
the second command stored in the command storage section included in said first terminal device comprises a command for opening the descriptor stored in the descriptor storage section of said second terminal device, and a command for reading out the opened descriptor; and
said network control section determines a medium type handled by the second terminal device, based on a response to the command for reading out the descriptor.

7. The network system according to claim 5, wherein:
said second terminal device comprises a storage section for storing data on a format handled by the device;
the second command stored in the command storage section included in said first terminal device is a command for inquiring a format of a medium; and
said network control section determines the second terminal device to be a device of a predetermined medium format when there is a correct response to the command for inquiring a format of a medium.

8. The network system according to claim 5, wherein
said network control section performs processing of sending out said first and second commands after, said network control section has acquired node IDs of terminal devices connected to said network, when a bus line forming said network is reset.

9. A network connection terminal device connected to a predetermined network, comprising
a command storage section for storing a first command to be used to inquire of an opposite party connected via said network about a unit type or a subunit type, and a second command prepared so as to correspond to a type discriminated based on a response to said first command, and
a network control section for successively sending out the first command and the second command stored in said command storage section to said network, and determining a kind of a device of the opposite party based on a response thereto.

10. The network connection terminal device according to claim 9, wherein
the second command stored in said command storage section comprises a command for opening the descriptor stored of said opposite party, and a command for reading out the opened descriptor, and
said network control section determines a medium type of the device, based on a response to the command for reading out the descriptor.

11. The network connection terminal device according to claim 9, wherein
the second command stored in said command storage section is a command for inquiring a format of a medium, and
said network control section determines the device of the opposite party to be a device of a predetermined medium format when there is a correct response to the command for inquiring a format of a medium.

12. The network connection terminal device according to claim 9, wherein
said network control section performs processing of sending out said first and second commands after said network control section has acquired node IDs of devices connected to said network, when a bus line forming said network is reset.

13. A network connection terminal device connected to a predetermined network, comprising:
a data transmission section for performing communication with another terminal device in said network;
a command discrimination section for discriminating a command received by said data transmission section; and
a response generation section responsive to discrimination of the first command in said command discrimination section, for generating a first response to which data of a unit type or a subunit type that the device has is added, and responsive to discrimination of the second command in said command discrimination section after transmission of the first response, for generating a response to which data specified by the second command is added and sending out the generated response from said data transmission section.

14. The network connection terminal device according to claim 13, wherein
the network connection terminal device comprises a descriptor storage section for storing data on a configuration of the device as a descriptor, and
when said command discrimination section has discriminated the second command, processing of opening the descriptor stored in said descriptor storage section and processing of reading out the opened descriptor and sending the opened descriptor to a sender of the command are performed.

15. The network connection terminal device according to claim 13, wherein
the network connection terminal device comprises a storage section for storing data on a format handled by the device, and
when said command discrimination section has discriminated the second command, processing of sending data on the format to a sender of the command is performed.
